(19) **Europäisches Patentamt / European Patent Office / Office européen des brevets**

(11) **EP 4 647 518 A1**

(12) **EUROPEAN PATENT APPLICATION**
published in accordance with Art. 153(4) EPC

(43) Date of publication:
**12.11.2025   Bulletin 2025/46**

(21) Application number: **23932016.1**

(22) Date of filing: **05.04.2023**

(51) International Patent Classification (IPC):
**C21D 9/46** (2006.01)      **C22C 38/00** (2006.01)
**C22C 38/06** (2006.01)      **C22C 38/60** (2006.01)

(52) Cooperative Patent Classification (CPC):
**C21D 1/26; C21D 9/46; C22C 18/00; C22C 38/00;
C22C 38/06; C22C 38/60; C25D 5/36**

(86) International application number:
**PCT/JP2023/014138**

(87) International publication number:
**WO 2024/209605 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **JFE Steel Corporation
Tokyo 100-0011 (JP)**

(72) Inventors:
• **MINAMI Hidekazu
  Tokyo 100-0011 (JP)**
• **TOJI Yuki
  Tokyo 100-0011 (JP)**
• **WADA Yusuke
  Tokyo 100-0011 (JP)**
• **KAWASAKI Yoshiyasu
  Tokyo 100-0011 (JP)**

(74) Representative: **Haseltine Lake Kempner LLP
One Portwall Square
Portwall Lane
Bristol BS1 6BH (GB)**

(54) **HIGH-STRENGTH STEEL SHEET, METHOD FOR PRODUCING SAME, MEMBER, AND AUTOMOBILE COMPONENT**

(57)    A high strength steel sheet that has a TS of 1180 MPa or more, a high YR, a high bendability, and reduced damage to the sheared end face in a corrosion environment is provided. The high strength steel sheet has a specific chemical composition. At a 1/4 thickness position, an area ratio of martensite is 40 % or more, an area ratio of ferrite is 70 % or less, and a volume fraction of retained austenite is 20.0 % or less. At a 1/2 thickness position, the ratio of the standard deviation of Si concentration to the average Si concentration is 1.00 or less.

**Description**

TECHNICAL FIELD

The present disclosure relates to a high strength steel sheet, a method of producing the same, a member, and an automotive part.

BACKGROUND

In order to reduce $CO_2$ emissions through vehicle weight reduction while improving crashworthiness, advances are being made in strengthening steel sheets for automobiles. In addition, against the backdrop of the continuous introduction of new regulations, there has been an increasing number of cases in which high strength steel sheets are applied to major structural components and reinforcement parts that form the framework of an automobile cabin (hereinafter also referred to as "automobile frame structural components" or the like) in order to strengthen the automotive body. In particular, there has been a notable increase in the application of high strength steel sheets with a tensile strength (hereinafter also referred to as "TS") of 1180 MPa or more.

High strength steel sheets used in automobile frame structural components and the like are required to have high component strength when formed into the desired shape. Regarding the increase in component strength, for example, it is effective to enhance the yield ratio of the steel sheet (YR = YS/TS × 100. Hereinafter also referred to as "YR"). This results in an increase in the impact absorbed energy during automobile collisions.

Furthermore, among automobile frame structural components, for example, crash boxes and the like have bending sections. Therefore, steel sheets with a high bendability are preferably applied to such components from the perspective of formability.

As technology related to such high strength steel sheets, for example, claim 1 of Patent Literature (PTL) 1 recites "a galvannealed steel sheet having a galvannealed layer on the surface of the steel sheet, wherein the steel sheet has a chemical composition containing, in mass%, C: 0.03 % or more and 0.35 % or less, Si: 0.005 % or more and 2.0 % or less, Mn: 1.0 % or more and 4.0 % or less, P: 0.0004 % or more and 0.1 % or less, S: 0.02 % or less, sol.Al: 0.0002 % or more and 2.0 % or less, and N: 0.01 % or less, with the balance being Fe and impurities, a concentrated portion average spacing representing an average spacing of a concentrated portion in a direction orthogonal to a rolling direction at a depth of 50 μm from a surface of the steel sheet is 1000 μm or less, Mn and/or Si extended in the rolling direction being concentrated in the concentrated portion, a number density of cracks at a depth of 3 μm or more and 10 μm or less on the surface of the steel sheet is 3 cracks/mm or more and 1000 cracks/mm or less, the steel sheet has a steel microstructure containing, in area%, bainite: 60 % or more, retained austenite: 1 % or more, martensite: 1 % or more, and ferrite: 2 % or more and less than 20 %, and has an ultra-hard phase average spacing, which is an average nearest distance of the martensite and the retained austenite, of 20 μm or less, and the galvannealed steel sheet has mechanical properties with a tensile strength (TS) of 780 MPa or more".

CITATION LIST

Patent Literature

PTL 1: JP 2012-219342 A

SUMMARY

(Technical Problem)

Some automobile frame structural components are used in locations exposed to corrosion environments, and there is concern that the sheared end face of such components may be damaged by corrosion in the automotive operating environment. From this perspective, it is desirable for the high strength steel sheet to have reduced damage to the sheared end face in a corrosion environment.

However, the high strength steel sheet described in Patent Literature (PTL) 1 does not take into account the damage to the sheared end face in a corrosion environment. Therefore, from the perspective of increasing the application ratio of high strength steel sheets with a TS of 1180 MPa or more to automobile frame structural components, demand currently exists for the development of high strength steel sheets with a TS of 1180 MPa or more, a high YR, a high bendability, and reduced damage to the sheared end face in a corrosion environment.

The present disclosure has been developed in view of the above circumstances and aims to provide a high strength steel sheet that has a TS of 1180 MPa or more, a high YR, a high bendability, and reduced damage to the sheared end face in a corrosion environment.

The present disclosure also aims to provide a method of producing the above high strength steel sheet.

Furthermore, the present disclosure aims to provide a member formed using the above high strength steel sheet.

Here, "high YR" means that YR is 65 % or more. YR is determined by the following Expression (2).

$$YR = YS/TS \times 100 \qquad (2)$$

TS and YS are each measured in accordance with JIS Z 2241.

Here, a "high bendability" means that in a bend test conducted in accordance with JIS Z 2248 (for details, refer to the EXAMPLES section below), the evaluation of the presence or absence of cracks at the ridge of the tip of the bend test specimen indicates the absence of cracks, or that a microfissure of less than 200 $\mu$m has occurred.

Here, "reduced damage to the sheared end face in a corrosion environment" means that in the hydrochloric acid immersion test described in the EXAMPLES section below, the crack length on the sheared end face of the test piece after immersion in hydrochloric acid is 300 $\mu$m or less.

(Solution to Problem)

We intensely studied how to achieve the aforementioned objectives and made the following discoveries.

(1) By having a microstructure mainly composed of martensite (quenched martensite and tempered martensite), a high YR can be achieved.

(2) By making the volume fraction of retained austenite 20 % or less, a high bendability and reduced damage to the sheared end face in a corrosion environment can be achieved.

(3) By making the ratio of the standard deviation of Si concentration to the average Si concentration at the 1/2 thickness position (hereinafter also referred to as "standard deviation of Si concentration/average Si concentration") 1.00 or less, reduced damage to the sheared end face in a corrosion environment can be achieved.

The present disclosure is based on these discoveries. The primary features of the present disclosure are as follows.

[1] A high strength steel sheet comprising:

a chemical composition containing (consisting of), in mass%,
C: 0.030 % or more and 0.500 % or less,
Si: 0.01 % or more and 2.50 % or less,
Mn: 0.10 % or more and 5.00 % or less,
P: 0.100 % or less,
S: 0.0200 % or less,
Al: 1.000 % or less,
N: 0.0100 % or less, and
O: 0.0100 % or less,
with the balance being Fe and inevitable impurities, wherein
at a 1/4 thickness position,

an area ratio of martensite is 40 % or more,
an area ratio of ferrite is 70 % or less,
a volume fraction of retained austenite is 20.0 % or less, and

at a 1/2 thickness position,
a ratio of a standard deviation of Si concentration to an average Si concentration is 1.00 or less.

[2] The high strength steel sheet according to [1], wherein the chemical composition further contains, in mass%, at least one selected from the group consisting of

Ti: 0.200 % or less,
Nb: 0.200 % or less,
V: 0.200 % or less,

Ta: 0.10 % or less,
W: 0.10 % or less,
B: 0.0100 % or less,
Cr: 1.00 % or less,
Mo: 1.00 % or less,
Ni: 1.00 % or less,
Co: 0.010 % or less,
Cu: 1.00 % or less,
Sn: 0.200 % or less,
Sb: 0.200 % or less,
Ca: 0.0100 % or less,
Mg: 0.0100 % or less,
REM: 0.0100 % or less,
Zr: 0.100 % or less,
Te: 0.100 % or less,
Hf: 0.10 % or less, and
Bi: 0.200 % or less.

[3] The high strength steel sheet according to [1] or [2], comprising a surface soft layer that is a region having a Vickers hardness of 85 % or less of a Vickers hardness at a 1/4 thickness position of the high strength steel sheet and is a region within 200 $\mu$m from a surface of the high strength steel sheet in a thickness direction, wherein

when measuring nanohardness at 300 or more points of a sheet surface in a 50 $\mu$m $\times$ 50 $\mu$m region at a 1/4 depth position in the thickness direction and a 1/2 depth position in the thickness direction of the surface soft layer from the surface of the high strength steel sheet,
a ratio of a number of measurements with a nanohardness of the sheet surface of 7.0 GPa or more at the 1/4 depth position in the thickness direction of the surface soft layer from the surface of the high strength steel sheet is 0.10 or less with respect to a total number of measurements,
a standard deviation $\sigma$ of the nanohardness of the sheet surface at the 1/4 depth position in the thickness direction of the surface soft layer from the surface of the high strength steel sheet is 1.8 GPa or less, and
a standard deviation $\sigma$ of the nanohardness of the sheet surface at the 1/2 depth position in the thickness direction of the surface soft layer from the surface of the high strength steel sheet is 2.2 GPa or less.

[4] The high strength steel sheet according to any one of [1] to [3], comprising, on one side or both sides of the high strength steel sheet, a metal coated or plated layer containing a total of over 50 mass% of one or more selected from Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi.
[5] The high strength steel sheet according to any one of [1] to [4], comprising, on an outermost layer of one side or both sides of the high strength steel sheet, a metal coated or plated layer containing a total of 50 mass% or more of at least one of zinc and aluminum.
[6] A method of producing a high strength steel sheet, the method comprising:

casting molten steel having the chemical composition recited in [1] or [2] and subsequently cooling the molten steel with an average cooling rate of 3.0 °C/h or more in a temperature range of 500 °C or more and 700 °C or less, and an average cooling rate of 1.0 °C/h or more in a temperature range of 400 °C or more and less than 500 °C to obtain a steel slab;
heating the steel slab to a slab heating temperature $T_1$ of 1150 °C or more, subsequently hot rolling the steel slab with a coiling temperature of 600 °C or less and a retention time of 50000 s or less in a temperature range of 300 °C or more and 400 °C or less during cooling after coiling to obtain a hot-rolled sheet, the retention time in a temperature range of 1100 °C or more and $T_1$ or less during heating of the steel slab being 20 min or more;
pickling the hot-rolled sheet;
cold rolling the hot-rolled sheet subjected to picking to obtain a cold-rolled sheet;
heating the cold-rolled sheet to a heating temperature $T_2$ at or above an $Ac_3$ point in °C defined by Expression [1], with an average heating rate of 10 °C/s or more in a temperature range of 250 °C or more and 700 °C or less, to anneal the cold-rolled sheet, the retention time in a temperature range of 750 °C or more and less than the $Ac_3$ point being 200 s or less; and
cooling the annealed cold-rolled sheet with an average cooling rate of 1.0 °C/s or more in a temperature range of 250 °C or more and 400 °C or less to obtain a high strength steel sheet,

$$\text{Ac}_3 \text{ point } (°C) = 910 - 203 \times [\%C]^{1/2} + 44.7 \times [\%Si] - 30 \times [\%Mn] + 700 \times [\%P] + 400 \times [\%Al] + 400 \times [\%Ti] + 104 \times [\%V] + 13.1 \times [\%W] - 11 \times [\%Cr] + 31.5 \times [\%Mo] - 15.2 \times [\%Ni] - 20 \times [\%Cu] \qquad [1]$$

where [%X] indicates a content of a component element X in steel in mass% and is 0 in a case in which the component element X is not contained.

[7] The method of producing a high strength steel sheet according to [6], wherein in the annealing of the cold-rolled sheet, an oxygen concentration of an atmosphere in the temperature range of 250 °C or more and 700 °C or less is 2 volume ppm or more and 30 volume ppm or less, and a dew point of the atmosphere at the heating temperature $T_2$ is -35 °C or more.

[8] The method of producing a high strength steel sheet according to [6] or [7], wherein the cooling of the annealed cold-rolled sheet includes holding at a temperature $T_3$ of 100 °C or more and 450 °C or less for 5 s or more.

[9] The method of producing a high strength steel sheet according to any one of [6] to [8], wherein in the cooling of the annealed cold-rolled sheet, after stopping cooling at a cooling stop temperature $T_4$ of 250 °C or less, the annealed cold-rolled sheet is reheated to a temperature of $T_4$ + 50 °C or more and 450 °C or less and is held at the temperature for 5 s or more.

[10] The method of producing a high strength steel sheet according to any one of [6] to [9], comprising applying a metal coating or plating on one side or both sides of the cold-rolled sheet before annealing of the cold-rolled sheet, the metal coating or plating containing a total of over 50 mass% of one or more selected from Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi.

[11] The method of producing a high strength steel sheet according to any one of [6] to [10], comprising performing coating or plating treatment after cooling of the annealed cold-rolled sheet to apply a metal coating or plating containing a total of 50 mass% or more of at least one of zinc and aluminum.

[12] A member at least partially made of the high strength steel sheet according to any one of [1] to [5].

[13] An automotive part made from the member according to [12].

(Advantageous Effect)

According to the present disclosure, it is possible to provide a high strength steel sheet that has a TS of 1180 MPa or more, a high YR, a high bendability, and reduced damage to the sheared end face in a corrosion environment, along with a method of producing the same.

BRIEF DESCRIPTION OF THE DRAWINGS

In the accompanying drawings:

FIGS. 1A and 1B are schematic diagrams related to the production of a U-bend + close-bend test sample of the Examples, where FIG. 1A relates to U-bending processing (primary bending), and FIG. 1B relates to bending (secondary bending);

FIGS. 2A and 2B are schematic diagrams related to the production of a V-bend + orthogonal VDA bend test sample of the Examples, where FIG. 2A relates to V-bending processing (primary bending), and FIG. 2B relates to orthogonal VDA bending (secondary bending);

FIGS. 3A, 3B, and 3C are schematic diagrams related to an axial crushing test sample and test of the Examples, where FIG. 3A is a front view of a test member, FIG. 3B is a front view of the test member, and FIG. 3C is a schematic diagram illustrating the axial crushing test.

DETAILED DESCRIPTION

The presently disclosed techniques will be described below by way of embodiments. The present disclosure is not limited to the following embodiments.

[1] High strength steel sheet

[1-1] Chemical composition

First, the chemical composition of the high strength steel sheet according to the present disclosure will be explained. The "%" representations below indicating the chemical composition of the steel are in "mass%" unless stated otherwise.

[C: 0.030 % or more and 0.500 % or less]

C is one of the important basic components of steel, and particularly in the present disclosure, C is an important element that affects the area ratio of martensite, ferrite, and retained austenite. If the C content is less than 0.030 %, the area ratio of martensite decreases, making it difficult to achieve the desired TS. On the other hand, if the C content exceeds 0.500 %, martensite becomes brittle, and the amount of retained austenite increases, increasing the amount of martensite transforming from retained austenite. Consequently, the bendability degrades. Also, the increase in retained austenite causes cracks to form on the sheared end face during shearing, resulting in an increase in crack length after hydrochloric acid immersion, and greater damage to the sheared end face in a corrosion environment. Therefore, the C content is set to 0.030 % or more and 0.500 % or less. The C content is preferably 0.050 % or more. The C content is more preferably 0.070 % or more. The C content is preferably 0.400 % or less. The C content is more preferably 0.300 % or less.

[Si: 0.01 % or more and 2.50 % or less]

Si is one of the important basic components of steel, and particularly in the present disclosure, Si is an element that affects the hardness of martensite and the area ratio of retained austenite by suppressing carbide formation during continuous annealing and promoting the formation of retained austenite. If the Si content is less than 0.01 %, the tempering of martensite progresses, making it difficult to achieve the desired TS. On the other hand, if the Si content exceeds 2.50 %, the segregation of Si becomes significant, resulting in an increase in the standard deviation of the Si concentration/average Si concentration at the 1/2 thickness position, and greater damage to the sheared end face in a corrosion environment. Also, the amount of retained austenite increases, increasing the amount of martensite transforming from retained austenite. Consequently, the bendability degrades. Therefore, the Si content is set to 0.01 % or more and 2.50 % or less. The Si content is preferably 0.05 % or more. The Si content is more preferably 0.10 % or more. The Si content is preferably 2.00 % or less. The Si content is more preferably 1.80 % or less.

[Mn: 0.10 % or more and 5.00 % or less]

Mn is one of the important basic components of steel, and particularly in the present disclosure, Mn is an important element that affects the area ratio of martensite. If the Mn content is less than 0.10 %, the area ratio of martensite decreases, making it difficult to achieve a TS of 1180 MPa or more. On the other hand, if the Mn content exceeds 5.00 %, the segregation of Mn becomes significant, and as a result, the segregation of Si also becomes significant, leading to an increase in the standard deviation of the Si concentration/average Si concentration at the 1/2 thickness position, and greater damage to the sheared end face in a corrosion environment. Also, the amount of retained austenite increases, increasing the amount of martensite transforming from retained austenite. Consequently, the bendability degrades. Therefore, the Mn content is set to 0.10 % or more and 5.00 % or less. The Mn content is preferably 0.80 % or more. The Mn content is more preferably 1.00 % or more. The Mn content is preferably 4.50 % or less. The Mn content is more preferably 4.00 % or less.

[P: 0.100 % or less]

P is an element that segregates at the prior austenite grain boundary, embrittling the grain boundary, and reduces the ultimate deformability of the steel sheet, potentially decreasing the bendability as well. Therefore, the P content is 0.100 % or less. The P content is preferably 0.070 % or less. No lower limit is placed on the P content, but since P is a solid-solution-strengthening element that can increase the strength of the steel sheet, the P content is preferably 0.001 % or more.

[S: 0.0200 % or less]

S exists as a sulfide and is an element that reduces the ultimate deformability of the steel sheet, which may also degrade the bendability. Therefore, the S content is 0.0200 % or less. The S content is preferably 0.0050 % or less. No lower limit is placed on the S content, but due to production technology constraints, the S content is preferably 0.0001 % or more.

[Al: 1.000 % or less]

Al is an element that raises the $A_3$ transformation temperature, which can lead to a large amount of ferrite in the steel microstructure, making it difficult to achieve the desired YR. Therefore, the Al content is 1.000 % or less. The Al content is preferably 0.500 % or less. No lower limit is placed on the Al content, but the Al content is preferably 0.001 % or more, since Al suppresses carbide formation during continuous annealing and promotes the formation of retained austenite.

[N: 0.0100 % or less]

N exists as a nitride and is an element that reduces the ultimate deformability of the steel sheet, which may also degrade the bendability. Therefore, the N content is 0.0100 % or less. The N content is preferably 0.0050 % or less. No lower limit is placed on the N content, but due to production technology constraints, the N content is preferably 0.0001 % or more.

[O: 0.0100 % or less]

O exists as an oxide and is an element that reduces the ultimate deformability of the steel sheet, which may also degrade the bendability. Therefore, the O content is 0.0100 % or less. The O content is preferably 0.0050 % or less. No lower limit is placed on the O content, but due to production technology constraints, the O content is preferably 0.0001 % or more.

[Optional components]

In addition to the above chemical composition, the high strength steel sheet of the present disclosure may further contain, in mass%, at least one element selected from the group consisting of

Ti: 0.200 % or less, Nb: 0.200 % or less, V: 0.200 % or less,
Ta: 0.10 % or less, W: 0.10 % or less,
B: 0.0100 % or less,
Cr: 1.00 % or less, Mo: 1.00 % or less, Ni: 1.00 % or less,
Co: 0.010 % or less,
Cu: 1.00 % or less,
Sn: 0.200 % or less,
Sb: 0.200 % or less,
Ca: 0.0100 % or less, Mg: 0.0100 % or less, REM: 0.0100 % or less, Zr: 0.020 % or less, Te: 0.020 % or less,
Hf: 0.10 % or less, and
Bi: 0.200 % or less.

These elements may be included alone or in combinations of two or more.

When Ti, Nb, or V is contained, coarse precipitates and inclusions are generated in large quantities, which reduces the ultimate deformability of the steel sheet and degrades the bendability. To avoid this, the content of Ti, Nb, or V is preferably 0.200 % or less. The content of Ti, Nb, or V is more preferably 0.100 % or less. No lower limit is placed on the content of Ti, Nb, or V, but the content of Ti, Nb, or V is preferably 0.001 % or more to increase the strength of the steel sheet by the formation of fine carbides, nitrides, or carbonitrides during hot rolling or continuous annealing.

When Ta or W is contained, coarse precipitates and inclusions are generated in large quantities, which reduces the ultimate deformability of the steel sheet and reduces the bendability. To avoid this, the content of Ta or W is preferably 0.10 % or less. The content of Ta or W is more preferably 0.08 % or less. No lower limit is placed on the content of Ta or W, but the content of Ta or W is preferably 0.01 % or more to increase the strength of the steel sheet by the formation of fine carbides, nitrides, or carbonitrides during hot rolling or continuous annealing.

When B is included, cracks are generated inside the steel sheet during casting or hot rolling, which reduces the ultimate deformability of the steel sheet and consequently degrades the bendability. To avoid this, the B content is preferably 0.0100 % or less. The B content is more preferably 0.0080 % or less. No lower limit is placed on the B content, but the B content is preferably 0.0003 % or more, since B is an element that improves hardenability by segregating at austenite grain boundaries during annealing.

When Cr, Mo, or Ni is contained, coarse precipitates and inclusions increase, which reduces the ultimate deformability of the steel sheet and consequently degrades the bendability. To avoid this, the content of Cr, Mo, or Ni is preferably 1.00 % or less. The content of Cr, Mo, or Ni is more preferably 0.80 % or less. No lower limit is placed on the content of Cr, Mo, or Ni, but the content of Cr, Mo, or Ni is preferably 0.01 % or more since these are elements that improve hardenability.

When Co is contained, coarse precipitates and inclusions increase, which reduces the ultimate deformability of the steel sheet and consequently degrades the bendability. To avoid this, the Co content is preferably 0.010 % or less. The Co content is more preferably 0.008 % or less. No lower limit is placed on the Co content, but the Co content is preferably 0.001 % or more, since Co is an element that improves hardenability.

When Cu is contained, coarse precipitates and inclusions increase, which reduces the ultimate deformability of the steel sheet and consequently degrades the bendability. To avoid this, the Cu content is preferably 1.00 % or less. The Cu content is more preferably 0.80 % or less. No lower limit is placed on the Cu content, but the Cu content is preferably 0.01 % or more since Cu is an element that improves hardenability.

When Sn is included, cracks are generated inside the steel sheet during casting or hot rolling, which reduces the ultimate deformability of the steel sheet and consequently degrades the bendability. To avoid this, the Sn content is preferably 0.200 % or less. The Sn content is more preferably 0.100 % or less. No lower limit is placed on the Sn content, but the Sn content is preferably 0.001 % or more, since Sn is an element that improves hardenability.

When Sb is contained, coarse precipitates and inclusions increase, which reduces the ultimate deformability of the steel sheet and consequently degrades the bendability. To avoid this, the Sb content is preferably 0.200 % or less. The Sb content is more preferably 0.100 % or less. No lower limit is placed on the Sb content, but the Sb content is preferably 0.001 % or more since Sb is an element that controls the thickness of surface layer softening and enables strength adjustment.

When Ca, Mg, or REM is contained, coarse precipitates and inclusions increase, which reduces the ultimate deformability of the steel sheet and consequently degrades the bendability. To avoid this, the content of Ca, Mg, or REM is preferably 0.0100 % or less. The content of Ca, Mg, or REM is more preferably 0.0050 % or less. No lower limit is placed on the content of Ca, Mg, or REM, but the content of Ca, Mg, or REM is preferably at least 0.0005 %, since these elements make the shape of nitrides or sulfides spheroidal and improve the ultimate deformability of the steel sheet.

When Zr or Te is contained, coarse precipitates and inclusions increase, which reduces the ultimate deformability of the steel sheet and consequently degrades the bendability. To avoid this, the content of Zr or Te is preferably 0.100 % or less. The content of Zr or Te is more preferably 0.080 % or less. No lower limit is placed on the content of Zr or Te, but the content of Zr or Te is preferably at least 0.001 %, since these elements make the shape of nitrides or sulfides spheroidal and improve the ultimate deformability of the steel sheet.

When Hf is contained, coarse precipitates and inclusions increase, which reduces the ultimate deformability of the steel sheet and consequently degrades the bendability. To avoid this, the Hf content is preferably 0.10 % or less. The Hf content is more preferably 0.08 % or less. No lower limit is placed on the Hf content, but the Hf content is preferably at least 0.01 %, since Hf is an element that makes the shape of nitrides or sulfides spheroidal and improves the ultimate deformability of the steel sheet.

When Bi is contained, coarse precipitates and inclusions increase, which reduces the ultimate deformability of the steel sheet and consequently degrades the bendability. To avoid this, the Bi content is preferably 0.200 % or less. The Bi content is more preferably 0.100 % or less. No lower limit is placed on the Bi content, but the Bi content is preferably 0.001 % or more, since Bi is an element that reduces segregation.

The high strength steel sheet of the present disclosure has a chemical composition containing essential components and optionally additional components, with the balance being Fe and inevitable impurities. Here, examples of the inevitable impurities include Zn, Pb, As, Ge, Sr, and Cs. Inclusion of these inevitable impurities is allowable in a total amount of 0.100 % or less.

[1-2] Steel microstructure

The steel microstructure of the high strength steel sheet of the present disclosure will be described.

[Area ratio of martensite: 40 % or more]

If the area ratio of martensite is less than 40 %, it becomes difficult to achieve a TS of 1180 MPa or more, a high YR, and a high bendability. Therefore, the area ratio of martensite is set to 40 % or more. The area ratio of martensite is preferably 55 % or more. The area ratio of martensite is more preferably 60 % or more. The area ratio of martensite is even more preferably 80 % or more. No upper limit is placed on the area ratio of martensite, and the desired properties can be obtained even with an area ratio of 100 %.

The martensite referred to here includes tempered martensite and bainite in addition to quenched martensite (fresh martensite). The observation position for the area ratio of martensite is set at 1/4 of the thickness of the steel sheet, as described later.

[Area ratio of ferrite: 70 % or less]

If the area ratio of ferrite exceeds 70 %, it becomes difficult to achieve a TS of 1180 MPa or more, a high YR, and a high bendability. Therefore, the area ratio of ferrite is preferably 70 % or less. The area ratio of ferrite is preferably 50 % or less. The area ratio of ferrite is more preferably 40 % or less. The area ratio of ferrite is even more preferably 30 % or less.

No lower limit is placed on the area ratio of ferrite, and the desired properties can be obtained even with an area ratio of 0 %.

The ferrite referred to here includes bainitic ferrite. The observation position for the area ratio of ferrite is set at 1/4 of the thickness of the steel sheet, as described later.

The method of measuring the area ratios of martensite (quenched martensite, tempered martensite, and bainite) and ferrite (bainitic ferrite) is as follows.

A sample is cut from the steel sheet so that the sheet thickness cross-section (L cross-section) parallel to the rolling direction is the observation plane. The observation plane of the sample is subjected to mirror polishing using diamond paste, then subjected to finishing polishing with alumina, and further etched with 3 volume % nital to reveal the microstructure.

Next, for the sample, the 1/4 thickness position of the latter half is set as the observation plane, and under a set of conditions including an accelerating voltage of 10 kV, a scanning electron microscope (SEM) is used to observe at a 3000x magnification and obtain SEM images for three fields of view (1 field of view being 40 $\mu$m $\times$ 30 $\mu$m).

From the obtained SEM images, the area ratio of each microstructure (ferrite (bainitic ferrite), martensite (quenched martensite, tempered martensite, and bainite)) is calculated using Adobe Photoshop (produced by Adobe Systems). Specifically, the value obtained by dividing the area of each microstructure by the measured area is taken as the area ratio of each microstructure. The area ratio of each microstructure is calculated for three fields of view, and the average value of these area ratios is taken as the area ratio of each microstructure.

In the SEM images, ferrite (bainitic ferrite) is a recessed microstructure that is flat and does not contain carbides, tempered martensite and bainite are recessed microstructures that contain fine carbides, and quenched martensite is a protruding structure with fine irregularities inside the microstructure, making these microstructures distinguishable from each other. Note that tempered martensite and bainite do not need to be distinguishable from each other, since the total area ratio is sought as the area ratio of martensite.

Furthermore, since the steel microstructure of the steel sheet is generally symmetrical up and down in the thickness direction, any one of the surfaces (front and back surfaces) of the steel sheet can be used as a representative surface in identifying the microstructure and measuring the volume fraction of retained austenite and the thickness of the surface soft layer described below. For example, any one of the surfaces (front and back surfaces) of the steel sheet can be used as the initiation point of a thickness position such as a 1/4 thickness position (thickness 0 position). The same applies below.

[Volume fraction of retained austenite: 20.0 % or less]

If the volume fraction of retained austenite exceeds 20.0 %, the amount of martensite transforming from retained austenite increases, leading to degradation of the bendability. Additionally, cracks form on the sheared end face during shearing, resulting in an increase in crack length after hydrochloric acid immersion, and the damage to the sheared end face in a corrosion environment is exacerbated. Therefore, the volume fraction of retained austenite is set to 20.0 % or less. The volume fraction of retained austenite is preferably 15 % or less. The volume fraction of retained austenite is more preferably 10 % or less. The volume fraction of retained austenite is even more preferably 5 % or less. No lower limit is placed on the volume fraction of retained austenite, and the desired properties can be obtained even with a volume fraction of 0 %.

The observation position for the volume fraction of retained austenite is set at the 1/4 thickness position of the steel sheet, and the method of measurement is as follows.

First, the steel sheet is ground so that the 1/4 thickness position (the position corresponding to 1/4 of the thickness in the depth direction from the surface of the steel sheet) becomes the measurement surface, and the steel sheet is then further polished 0.1 mm through chemical polishing to obtain a sample.

For the measurement surface of the sample, an X-ray diffractometer is used to measure the integrated reflection intensities of the (200), (220), and (311) planes of fcc iron (austenite), along with the (200), (211), and (220) planes of bcc iron, using a Co K$\alpha$ radiation source.

The intensity ratios of the integrated reflection intensities from each plane of fcc iron to those from each plane of bcc iron are calculated. The average value of the nine intensity ratios is taken as the volume fraction of retained austenite.

[Residual microstructure]

The steel microstructure of the present disclosure may have a microstructure (residual microstructure) other than the aforementioned martensite, ferrite, and retained austenite.

Known microstructures of steel sheets other than martensite, ferrite, and retained austenite can be mentioned as residual microstructures, and examples include pearlite, cementite, and carbides such as metastable carbides (epsilon ($\varepsilon$) carbide, eta ($\eta$) carbide, chi ($\chi$) carbide, and the like). The identification of the residual microstructure can be performed by, for example, observation using SEM.

The area ratio of the residual microstructure at the 1/4 thickness position of the steel sheet is preferably 5 % or less and may be 0 %.

The area ratio of the residual microstructure is calculated by the following formula.

[area ratio of residual microstructure (%)] = 100 - [area ratio of martensite (%)] - [area ratio of ferrite (%)] - [volume fraction of retained austenite (%)]

[1-3] Standard deviation of Si concentration at the 1/2 thickness position/average Si concentration

The ratio of the standard deviation of the Si concentration to the average Si concentration (standard deviation of Si concentration/average Si concentration) is extremely important in the present disclosure, and by reducing the standard deviation of Si concentration/average Si concentration, i.e., by suppressing the segregation of Si, it is possible to reduce the damage to the sheared end face in a corrosion environment. To obtain such an effect, the standard deviation of Si concentration/average Si concentration at the 1/2 thickness position is set to 1.00 or less. This value is preferably 0.80 % or less. This value is more preferably 0.60 % or less. This value is even more preferably 0.50 % or less. No lower limit is placed on the standard deviation of Si concentration/average Si concentration at the 1/2 thickness position, and the desired properties can be obtained even at a value of 0.

Here, the method of measuring the standard deviation of Si concentration/average Si concentration at the 1/2 thickness position is as follows.

A sample is cut from the steel sheet so that the sheet thickness cross-section (L cross-section) parallel to the rolling direction is the observation plane. The observation plane of the sample is polished. Next, the observation plane of the sample is subjected to mirror polishing using diamond paste and is then subjected to finish polishing using alumina.

Next, at the observation plane of the sample, an electron probe microanalyzer (EPMA) is used to set the center position of the thickness of the steel sheet as the observation position (i.e., the center position of the thickness of the steel sheet (1/2 thickness position) is set as the center position of the measurement region in the thickness direction), measure the Si concentration under a set of conditions including an accelerating voltage of 15 kV, a measurement region of 500 $\mu$m × 800 $\mu$m, a beam diameter of 2.0 $\mu$m, and 250 × 400 measurement points (grid with measurement intervals of 2 $\mu$m), and calculate the standard deviation of Si concentration/average Si concentration at the 1/2 thickness position. The average value of the values calculated in three regions is taken as the standard deviation of Si concentration/average Si concentration at the 1/2 thickness position.

[1-4] Sheet thickness

No limit is placed on the thickness of the high strength steel sheet of the present disclosure, but the thickness is usually 0.3 mm or more and 2.8 mm or less.

[1-5] Surface soft layer

The surface of the high strength steel sheet of the present disclosure is preferably a soft layer (surface soft layer). Since the surface soft layer contributes to suppressing the propagation of bending cracks during press forming and automotive body collisions, further improvement in the bendability can be achieved.

The surface layer refers to the region, corresponding to a thickness of 200 $\mu$m, up to 200 $\mu$m in the thickness direction from the surface of the high strength steel sheet.

In the case of a high strength steel sheet that has undergone a coating or plating treatment such as a hot-dip galvanized steel sheet, a galvannealed steel sheet, an electrogalvanized steel sheet, or other metal-coated or plated steel sheet, the surface layer of the high strength steel sheet refers to the region, corresponding to a thickness of 200 $\mu$m, up to 200 $\mu$m in the thickness direction from the surface of the steel sheet, which is the base (substrate) for the various coatings or platings.

The soft layer refers to the region with a Vickers hardness of 85 % or less compared to the Vickers hardness of a cross-section (a plane parallel to the steel sheet surface) at the 1/4 thickness position of the high strength steel sheet. The soft layer includes the decarburized layer at the surface layer of the high strength steel sheet.

The surface soft layer refers to the soft layer contained in the surface layer and can be the entire surface layer or part of the surface layer. The surface soft layer can correspond to a region with a thickness of up to 200 $\mu$m in the thickness direction from the surface of the high strength steel sheet.

For example, if the region with 85 % or less hardness compared to the Vickers hardness of a cross-section (a plane parallel to the steel sheet surface) at the 1/4 thickness position of the high strength steel sheet is formed at a predetermined depth in the thickness direction from the surface of the high strength steel sheet, and the predetermined depth is within 200 $\mu$m in the thickness direction, then the region corresponding to the thickness from the surface to the predetermined depth is the surface soft layer. If the predetermined depth exceeds 200 $\mu$m in the thickness direction, the region corresponding to a thickness of 200 $\mu$m from the surface of the high strength steel sheet up to 200 $\mu$m in the thickness direction is the surface soft layer.

In the case of including a surface soft layer, the thickness of the surface soft layer is preferably 10 $\mu$m or more. The thickness is more preferably 12 $\mu$m or more. The thickness is even more preferably 15 $\mu$m or more. To avoid a decrease in TS, the thickness of the surface soft layer is preferably 150 $\mu$m or less. The thickness is more preferably 100 $\mu$m or less. The thickness is even more preferably 80 $\mu$m or less.

Here, the thickness of the surface soft layer can be measured by the following method. After smoothing a thickness cross-section (L cross-section) of the base steel sheet parallel to the rolling direction by wet polishing, measurements were taken using a Vickers hardness tester at a load of 10 gf, from a position of 1 $\mu$m in the thickness direction from the surface of the base steel sheet to a position of 100 $\mu$m in the thickness direction, at intervals of 1 $\mu$m. Subsequently, measurements were taken at intervals of 20 $\mu$m up to the mid-thickness. The region where the hardness decreases to 85 % or less compared to the hardness at the 1/4 thickness position is defined as the soft layer (surface soft layer), and the thickness of that region in the thickness direction is taken as the thickness of the soft layer.

In the case of including a surface soft layer, when the nanohardness is measured at 300 or more points in a 50 $\mu$m $\times$ 50 $\mu$m region of the sheet surface at a 1/4 depth position in the thickness direction of the surface soft layer from the surface of the high strength steel sheet (a position at 1/4 of the thickness of the surface soft layer in the depth direction from the surface of the high strength steel sheet), the ratio of points having a nanohardness of 7.0 GPa or more is preferably 0.10 or less. If the ratio of points with a nanohardness of 7.0 GPa or more is 0.10 or less, the proportion of hard microstructures (such as martensite), inclusions, and the like is small, which can further suppress the generation and connection of voids, and also the progression of cracks, during press forming and collision in hard microstructures (such as martensite), inclusions, and the like, making it easier to obtain excellent bendability during press forming and excellent bending fracture characteristics during collision.

In the present disclosure, to obtain excellent bendability during press forming and excellent bending fracture characteristics during collision, it is preferable that the standard deviation $\sigma$ of the nanohardness of the sheet surface at the 1/4 depth position in the thickness direction of the surface soft layer depth from the surface of the high strength steel sheet be 1.8 GPa or less, and furthermore that the standard deviation $\sigma$ of the nanohardness of the sheet surface at the 1/2 depth position in the thickness direction of the surface soft layer depth from the surface of the high strength steel sheet be 2.2 GPa or less. When the standard deviation $\sigma$ of the nanohardness at the 1/4 depth position in the thickness direction of the sheet surface of the surface soft layer from the surface of the high strength steel sheet is 1.8 GPa or less, and furthermore, the standard deviation $\sigma$ of the nanohardness of the sheet surface at the 1/2 depth position in the thickness direction of the surface soft layer from the surface of the high strength steel sheet is 2.2 GPa or less, the hardness difference in the micro region is small, which can further suppress the generation and connection of voids, and also the progression of cracks, during press forming and collision, making it easier to obtain excellent bendability and excellent bending fracture characteristics during collision.

A more preferable range for the standard deviation $\sigma$ of the nanohardness of the sheet surface at the 1/4 depth position in the thickness direction of the surface soft layer from the surface of the high strength steel sheet is 1.7 GPa or less. A more preferable range for the standard deviation $\sigma$ of the nanohardness of the sheet surface at the 1/2 depth position in the thickness direction of the surface soft layer from the surface of the high strength steel sheet is 2.1 GPa or less.

Here, the nanohardness of the sheet surface at the 1/4 and 1/2 depth positions in the thickness direction is the hardness measured by the following method.

First, if a coated or plated layer is formed, the coated or plated layer is peeled off, and the area is up to the 1/4 depth in the thickness direction of the surface soft layer from the surface of the high strength steel sheet. The nanohardness is measured under a set of conditions including a load of 500 $\mu$N, a measurement region of 50 $\mu$m $\times$ 50 $\mu$m, and a point interval of 2 $\mu$m using a Berkovich diamond indenter.

In addition, mechanical polishing is performed up to the 1/2 depth position in the thickness direction of the surface soft layer, followed by buff polishing with diamond and alumina, and then colloidal silica polishing. The nanohardness is then measured under a set of conditions including a load of 500 $\mu$N, a measurement region of 50 $\mu$m $\times$ 50 $\mu$m, and a point interval of 2 $\mu$m using a Berkovich diamond indenter.

[1-6] Coated or plated layer

Additionally, the high strength steel sheet of the present disclosure may have a coated or plated layer on its surface.

<First coated or plated layer>

The high strength steel sheet of the present disclosure preferably includes a first coated or plated layer, which is a metal coated or plated layer, on one side or both sides of the base steel sheet. The first coated or plated layer is directly formed on the surface of the base steel sheet and is a metal coated or plated layer containing a total of over 50 mass% of one or more selected from Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi, excluding a galvanized layer, i.e., a hot-dip galvanized layer, a galvannealed layer, and an electrogalvanized layer, and excluding a hot-dip aluminum-coated layer. The first coated or plated layer is preferably a metal electroplating layer and is described below using a metal electroplating layer as an example.

By formation of a metal electroplating layer on the surface of the steel sheet, the metal electroplating layer that becomes the outermost layer contributes to suppressing bending cracks during press forming and automotive body collision, thereby further improving the bending fracture resistance characteristics.

As for the metal species of the metal electroplating layer, any of Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi is acceptable, but Fe is more preferable. An Fe-based electroplating layer is described below as an example.

The coating weight of the Fe-based electroplating layer is set to be more than 0 $g/m^2$. The coating weight is preferably 2.0 $g/m^2$ or more. No upper limit is placed on the coating weight per side of the Fe-based electroplating layer, but from a cost perspective, the coating weight per side of the Fe-based electroplating layer is preferably set to be 60 $g/m^2$ or less. The coating weight of the Fe-based electroplating layer is preferably 50 $g/m^2$ or less. The coating weight is more preferably 40 $g/m^2$ or less. The coating weight is even more preferably 30 $g/m^2$ or less.

The coating weight of the Fe-based electroplating layer is measured as follows. A sample with a size of 10 mm $\times$ 15 mm is taken from the Fe-based electroplated steel sheet and embedded in resin to create a cross-sectional embedded sample. Using a scanning electron microscope (SEM) at an accelerating voltage of 15 kV, the thickness of the Fe-based coated or plated layer is observed at a magnification of 2000 to 10000 times at any three locations of the same cross-section, and the average thickness of the three fields of view is multiplied by the density of iron for conversion to the coating weight per side of the Fe-based coated or plated layer.

As the Fe-based electroplating layer, an alloy coated or plated layer such as Fe-B alloy, Fe-C alloy, Fe-P alloy, Fe-N alloy, Fe-O alloy, Fe-Ni alloy, Fe-Mn alloy, Fe-Mo alloy, and Fe-W alloy can be used in addition to pure Fe. The chemical composition of the Fe-based electroplating layer is not particularly limited, but the chemical composition preferably contains one or more elements selected from the group consisting of B, C, P, N, O, Ni, Mn, Mo, Zn, W, Pb, Sn, Cr, V, and Co at a total of 10 mass% or less, with the balance being Fe and inevitable impurities. By limiting the total amount of elements other than Fe to 10 mass% or less, a decrease in electrolysis efficiency can be prevented, and an Fe-based electroplating layer can be formed at low cost. In the case of Fe-C alloys, the C content is preferably 0.08 mass% or less.

<Second coated or plated layer>

A high strength steel sheet according to an embodiment of the present disclosure may include a second coated or plated layer, which is a metal coated or plated layer, as the outermost layer on one side or both sides of the high strength steel sheet. The second coated or plated layer may contain at least one of zinc and aluminum in a total of 50 mass% or more, and can be a hot-dip galvanized layer, a galvannealed layer, an electrogalvanized layer, a hot-dip aluminum-coated layer, or the like.

The second coated or plated layer may be directly formed on one side or both sides of the surface of the base steel sheet, or may be formed on the first coated or plated layer.

Here, the hot-dip galvanized layer, galvannealed layer, and electrogalvanized layer refer to a coated or plated layer in which Zn (zinc) is the main component (with a Zn content of 50.0 mass% or more).

In addition, the coated or plated layer of an aluminum-plated steel sheet refers to a coated or plated layer in which Al (aluminum) is the main component (with an Al content of 50.0 mass% or more).

Here, the hot-dip galvanized layer is preferably formed by Zn, 20.0 mass% or less of Fe, and 0.001 mass% or more and 1.0 mass% or less of Al, for example. In addition, the hot-dip galvanized layer may optionally contain one or more elements selected from the group consisting of Pb, Sb, Si, Sn, Mg, Mn, Ni, Cr, Co, Ca, Cu, Li, Ti, Be, Bi, and REM in a total of more than 0.0 mass% and 3.5 mass% or less. The Fe content in the hot-dip galvanized layer is preferably less than 7.0 mass%. The balance other than the aforementioned elements is inevitable impurities.

The galvannealed layer is preferably formed by 20.0 mass% or less of Fe and 0.001 mass% or more and 1.0 mass% or less of Al, for example. In addition, the galvannealed layer may optionally contain one or more elements selected from the group consisting of Pb, Sb, Si, Sn, Mg, Mn, Ni, Cr, Co, Ca, Cu, Li, Ti, Be, Bi, and REM in a total of more than 0 mass% and 3.5 mass% or less. The Fe content in the galvannealed layer is preferably 7.0 mass% or more. The Fe content is more preferably 8.0 mass% or more. The Fe content in the galvannealed layer is preferably 15.0 mass% or less. The Fe content is more preferably 12.0 mass% or less. The balance other than the aforementioned elements is inevitable impurities.

In addition, no limit is placed on the coating weight per side of the galvanized layer, but the coating weight is preferably 20 $g/m^2$ or more and 80 $g/m^2$ or less.

The coating weight of the aforementioned galvanized layer is measured as follows. A treatment solution is prepared by adding 0.6 g of a corrosion inhibitor for Fe (Asahi Chemical Co., Ltd. "IBIT 700 BK"® (IBIT 700 BK is a registered trademark in Japan, other countries, or both)) to 1 L of a 10 mass% hydrochloric acid aqueous solution. Next, a sample of a steel sheet provided with a galvanized layer is immersed in a treatment solution to dissolve the galvanized layer. Then, the coating weight ($g/m^2$) is calculated by measuring the mass reduction of the sample from before to after dissolving and dividing that value by the surface area of the base steel sheet (the surface area of the part covered by the coating or plating).

[2] Method of producing high strength steel sheet

Next, a method, according to the present disclosure, of producing a high strength steel sheet (hereinafter referred to as "production method") is described. The production method of the present disclosure is also a method of producing the above-described high strength steel sheet of the present disclosure.

The method of producing a high strength steel sheet of the present disclosure includes casting molten steel having the aforementioned chemical composition of [1] or [2] and subsequently cooling the molten steel with an average cooling rate of 3.0 °C/h or more in a temperature range of 500 °C or more and 700 °C or less, and an average cooling rate of 1.0 °C/h or more in a temperature range of 400 °C or more and less than 500 °C to obtain a steel slab;

heating the steel slab to a slab heating temperature $T_1$ of 1150 °C or more, subsequently hot rolling the steel slab with a coiling temperature of 600 °C or less and a retention time of 50000 s or less in a temperature range of 300 °C or more and 400 °C or less during cooling after coiling to obtain a hot-rolled sheet, the retention time in a temperature range of 1100 °C or more and $T_1$ or less during heating of the steel slab being 20 min or more;
pickling the hot-rolled sheet;
cold rolling the hot-rolled sheet subjected to picking to obtain a cold-rolled sheet;
heating the cold-rolled sheet to a heating temperature range $T_2$ at or above an $Ac_3$ point in °C defined by Expression (1), with an average heating rate of 10 °C/s or more in a temperature range of 250 °C or more and 700 °C or less, to anneal the cold-rolled sheet, the retention time in a temperature range of 750 °C or more and equal to or less than the $Ac_3$ point being 200 s or less; and
cooling the annealed cold-rolled sheet with an average cooling rate of 1.0 °C/s or more in a temperature range of 250 °C or more and 400 °C or less to obtain a high strength steel sheet.

[2-1] Production of steel slab

The production method of the present disclosure includes melting steel material having the chemical composition of a high strength steel sheet to form a steel slab (slab). The method of melting the steel material is not particularly limited, and any known melting method such as a converter or electric furnace is suitable. The steel slab is preferably made with continuous casting to prevent macro segregation but may be produced with other methods such as ingot casting or thin slab casting.

In the production method of the present disclosure, during cooling after melting the steel material, the average cooling rate in the temperature range of 500 °C or more and 700 °C or less is set to 3.0 °C/h or more, and the average cooling rate in the temperature range of 400 °C or more and less than 500 °C is set to 1.0 °C/h or more.

[Average cooling rate in the temperature range of 500 °C or more and 700 °C or less: 3.0 °C/h or more]

In the production method of the present disclosure, it is essential to set the average cooling rate in the temperature range of 500 °C or more and 700 °C or less to 3 °C/h or more, and by adopting this condition, the slab structure can be made to be mainly in a low temperature transformation phase. As a result, the local concentration of Si during slab heating in the subsequent process is reduced, and the segregation of Si can be suppressed. To achieve such effects, the average cooling rate in the temperature range of 500 °C or more and 700 °C or less is set to 3.0 °C/h or more. This average cooling rate is preferably 5.0 °C/h or more. No upper limit is placed on the average cooling rate in the temperature range of 500 °C or more and 700 °C or less, but the upper limit is preferably 100.0 °C/h or less to control the thickness of the surface soft layer after annealing within an appropriate range and to obtain a suitable TS.

Here, the temperature of the slab refers to the temperature of the surface of the slab.

[Average cooling rate in the temperature range of 400 °C or more and less than 500 °C: 1 °C/h or more]

In the production method of the present disclosure, it is essential to set the average cooling rate in the temperature range of 400 °C or more and less than 500 °C to 1 °C/h or more, and by adopting this condition, the slab structure can be made to be mainly in a low temperature transformation phase. As a result, the local concentration of Si during steel slab heating in the subsequent process is reduced, and the segregation of Si can be suppressed. To achieve such effects, the average cooling rate in the temperature range of 400 °C or more and less than 500 °C is set to 1.0 °C/h or more. This average cooling rate is preferably 3.0 °C/h or more. No upper limit is placed on the average cooling rate in the temperature range of 400 °C or more and less than 500 °C, but the upper limit is preferably 80.0 °C/h or less to control the thickness of the surface soft layer after annealing within an appropriate range and to obtain a suitable TS.

Here, the temperature of the slab refers to the temperature of the surface of the slab.

[2-2] Hot rolling

The steel slab is heated to a slab heating temperature $T_1$ of 1150 °C or more. At that time, the retention time in the temperature range of 1100 °C or more and the slab heating temperature $T_1$ or less is set to 20 minutes or more. The steel slab to be heated may be one that has been cooled to room temperature in the previous process, or an energy-saving process such as hot direct rolling may be applied in which the warm slab is loaded into the heating furnace without being cooled first to room temperature.

[Slab heating temperature $T_1$: 1150 °C or more]

By the slab heating temperature $T_1$ being set to 1150 °C or more, the local concentration of Si decreases, and the segregation of Si can be suppressed. To achieve such effects, the slab heating temperature $T_1$ is set to 1150 °C or more. The slab heating temperature $T_1$ is preferably 1180 °C or more. No upper limit is placed on the slab heating temperature $T_1$, but the upper limit is preferably 1300 °C or less to control the thickness of the surface soft layer after annealing within an appropriate range and to obtain a suitable TS. The slab heating temperature $T_1$ is preferably 1300 °C or less. Here, the slab heating temperature refers to the temperature of the slab surface.

[Retention time in the temperature range of 1100 °C or more and slab heating temperature $T_1$ or less: 20 minutes or more]

By the retention time in the temperature range of 1100 °C or more and the slab heating temperature $T_1$ or less being set to 20 minutes or more, the local concentration of Si decreases, and the segregation of Si can be suppressed. To achieve such effects, the retention time in the temperature range of 1100 °C or more and $T_1$ or less is set to 20 minutes or more. The retention time is preferably 30 minutes or more. No upper limit is placed on the retention time in the temperature range of 1100 °C or more and the slab heating temperature $T_1$ or less, but the upper limit is preferably 300 minutes or less to control the thickness of the surface soft layer after annealing within an appropriate range and to obtain a suitable TS.

Here, the slab heating temperature refers to the temperature of the slab surface.

Next, the slab is hot rolled. Hot rolling can consist of rough rolling and finish rolling.

For example, the slab can be made into a sheet bar by rough rolling. The conditions for rough rolling are not particularly limited and can be known conditions.

Next, the sheet bar can be subjected to finish rolling. Before finish rolling, the sheet bar may be heated using a bar heater or the like.

The rolling finish temperature is preferably equal to or greater than the $Ar_3$ transformation temperature. If the rolling finish temperature is equal to or greater than the $Ar_3$ transformation temperature, an increase in rolling load and an increase in rolling reduction in the non-recrystallized state of austenite can be avoided, thereby suppressing the development of an abnormal microstructure elongated in the rolling direction and easily avoiding a decrease in workability of the steel sheet obtained after annealing.

The $Ar_3$ transformation temperature is determined by the following expression.

$$Ar_3 \ (°C) = 868 - 396 \times [\%C] + 24.6 \times [\%Si] - 68.1 \times [\%Mn] - 36.1 \times [\%Ni] - 20.7 \times [\%Cu] - 24.8 \times [\%Cr]$$

In the expression, [% element symbol] represents the content (mass %) of the corresponding element in the chemical composition.

Finish rolling may be conducted continuously by joining the sheet bars together. Also, the sheet bar may be temporarily coiled before finish rolling. Furthermore, to reduce the rolling load, part or all of the finish rolling may be conducted as lubrication rolling. Conducting lubrication rolling in such a manner is effective in terms of making shape and material property of a steel sheet uniform. In lubrication rolling, the coefficient of friction is preferably in the range of 0.10 or more and 0.25 or less.

In the production method of the present disclosure, controlling the retention time at the coiling temperature and in the temperature range of 300 °C or more and 400 °C or less after coiling during the cooling is particularly important.

[Coiling temperature: 600 °C or less]

In the hot rolling, after finish rolling, the hot-rolled sheet is coiled and recovered, and then cooled. At that time, by the coiling temperature being set to 600 °C or less, the hot-rolled microstructure can be made to be mainly in a low temperature transformation phase. As a result, the local concentration of Si during the final annealing is reduced, and the segregation of Si can be suppressed. To achieve such effects, the coiling temperature is set to 600 °C or less. The coiling temperature is preferably 550 °C or less. Since it is necessary to control the retention time in the temperature range of 300 °C or more and 400 °C or less during cooling after coiling, the coiling temperature is preferably 300 °C or more.

[Retention time in temperature range of 300 °C or more and 400 °C or less during cooling after coiling (hereinafter, residence time in temperature range of 300 °C or more and 400 °C or less): 50000 s or less]

After coiling the hot-rolled sheet into a coil shape, the hot-rolled sheet is retained in the temperature range of 300 °C or more and 400 °C or less for 50000 s or less. This allows the hot-rolled microstructure to be mainly in the low temperature transformation phase. As a result, the local concentration of Si during the final annealing is reduced, and the segregation of Si can be suppressed. To achieve such effects, the retention time in the temperature range of 300 °C or more and 400 °C or less is set to 50000 s or less. The retention time is preferably 30000 s or less. No lower limit is placed on the retention time in the temperature range of 300 °C or more and 400 °C or less, and the desired properties can be obtained even with a retention time of 2000 s, for example.

The cooling conditions after retention in the temperature range of 300 °C or more and 400 °C or less are not particularly restricted, and known conditions can be adopted. For example, the cooling rate is preferably 0.001 °C/s or more and 1 °C/s or less. The cooling stop temperature is preferably 20 °C or more and 200 °C or less.

[2-3] Pickling

After the hot-rolling, the hot-rolled sheet is pickled. Pickling can remove oxides from the surface of the steel sheet, ensuring good chemical convertibility and coating or plating quality. Pickling may be performed only once or may be performed in multiple stages. The pickling conditions are not particularly limited, and known conditions can be applied.

[2-4] Heat treatment (optional)

After pickling, the hot-rolled sheet may be subjected to heat treatment (hot-rolled sheet annealing). The heat treatment conditions are not particularly limited, and known conditions can be applied.

[2-5] Cold rolling

Next, the hot-rolled sheet is subjected to cold rolling to yield a cold-rolled sheet. The cold rolling conditions are not particularly limited, and known conditions can be applied.

For example, cold rolling can be performed using tandem multi-stand rolling, reverse rolling, or the like, with two or more rolling passes. The cumulative rolling reduction ratio of cold rolling is preferably 20 % or more. The cumulative rolling reduction ratio of cold rolling is preferably 75 % or less. The number of rolling passes and the reduction ratio for each pass are not particularly limited, and known conditions can be applied.

[2-6] First coating or plating (optional)

In one embodiment of the present disclosure, a first coating or plating that forms a first coated or plated layer that is a metal coated or plated layer on one side or both sides of the steel sheet after the hot rolling step (or after the cold rolling step in the case of applying cold rolling) and before the annealing step may be included. The first coating or plating is preferably metal electroplating treatment.

For example, a metal coating or plating treatment such as metal electroplating treatment (first coating or plating treatment) can be applied to the surface of the cold-rolled sheet obtained as described above, resulting in pre-annealing metal coated or plated steel sheet having a pre-annealing metal coated or plated layer formed on at least one side thereof. The metal coated or plated layer referred to here can be the aforementioned first coated or plated layer. The pre-annealing metal coated or plated steel sheet is preferably a pre-annealing metal electroplated steel sheet having a pre-annealing metal electroplating layer.

The method of metal electroplating is not particularly limited, but as described above, metal electroplating treatment is preferably applied, since the metal coated or plated layer to be formed on the base steel sheet is preferably a metal electroplating layer. For example, a sulfuric acid bath, a hydrochloric acid bath, or a mixture of both can be applied in an Fe-based electroplating bath. Moreover, the coating weight of the pre-annealing metal electroplating layer can be adjusted by the current passage time and the like. Here, the pre-annealing metal electroplated steel sheet refers to the metal electroplating layer not having undergone the annealing and does not exclude hot-rolled sheets, post-hot rolling acid-pickled sheets, or cold-rolled sheets that were annealed in advance before the metal electroplating treatment.

Here, the metal species of the electroplating layer can be any of Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi, but Fe is more preferable. A method of producing Fe-based electroplating is therefore described below.

The Fe ion concentration in the Fe-based electroplating bath before the start of current passage is preferably 0.5 mol/L or more as $Fe^{2+}$. If the Fe ion concentration in the Fe-based electroplating bath is 0.5 mol/L or more as $Fe^{2+}$, a sufficient Fe coating weight can be obtained. To obtain a sufficient Fe coating weight, the Fe ion concentration in the Fe-based electroplating bath before the start of current passage is preferably 2.0 mol/L or less.

The Fe-based electroplating bath can contain at least one element selected from the group consisting of B, C, P, N, O, Ni, Mn, Mo, Zn, W, Pb, Sn, Cr, V, and Co, in addition to Fe ions. The total content of these elements in the Fe-based electroplating bath is preferably adjusted so that the total content of these elements in the Fe-based electroplating layer before annealing is 10 mass% or less. Metal elements may be contained as metal ions, while non-metal elements can be included as part of boric acid, phosphoric acid, nitric acid, organic acids, or the like. The sulfuric acid iron plating solution may also contain a conductivity aid such as sodium sulfate or potassium sulfate, a chelating agent, and a pH buffer.

Other conditions of the Fe-based electroplating bath are not particularly limited. The temperature of the Fe-based electroplating solution is preferably set to 30 °C or more from the perspective of constant temperature retention. The temperature is preferably 85 °C or less. The pH of the Fe-based electroplating bath is not particularly limited, but the pH is preferably 1.0 or more to prevent a decrease in current efficiency due to hydrogen generation. The pH is also preferably 3.0 or less from the perspective of electrical conductivity of the Fe-based electroplating bath. The current density is preferably set to 10 A/dm² or more from the perspective of productivity. The current density is preferably 150 A/dm² or less to facilitate control of the coating weight of the Fe-based electroplating layer. The sheet passing speed is preferably set to 5 mpm or more from the perspective of productivity. The sheet passing speed is also preferably 150 mpm or less to stably control the coating weight.

As pretreatment before applying the Fe-based electroplating treatment, degreasing treatment and water washing to clean the surface of the cold-rolled sheet, as well as pickling treatment and water washing to activate the surface of the cold-rolled sheet, can be performed. Following these pretreatments, the Fe-based electroplating treatment is carried out. The methods for degreasing treatment and water washing are not particularly limited, and conventional methods may be used.

In the pickling treatment, various acids such as sulfuric acid, hydrochloric acid, nitric acid, and mixtures thereof can be used. Among these, sulfuric acid, hydrochloric acid, and mixtures thereof are preferred. The concentration of the acid is not particularly limited, but from the perspective of the ability to remove oxide coatings and prevent skin roughness (surface defects) due to over-pickling, the concentration is preferably 1 mass% or more. The concentration is preferably 20 mass% or less.

The pickling treatment solution may also contain a defoamer, a pickling accelerator, a pickling inhibitor, and the like.

[2-7] Annealing

The cold-rolled sheet obtained as described above or the cold-rolled sheet after the first coating or plating is subjected to annealing. The cold-rolled sheet may have been subjected to metal coating or plating, but it does not have to be subjected to such treatment. It is important to satisfy the following set of conditions during annealing.

[Average heating rate in temperature range of 250 °C or more and 700 °C or less: 10 °C/s or more]

By increasing the average heating rate in the temperature range of 250 °C or more and 700 °C or less (hereinafter referred to as the "heating temperature range"), the austenite generated during heating is refined, and the local concentration of Si is reduced, resulting in the suppression of segregation of Si. Therefore, the average heating rate in the temperature range of 250 °C or more and 700 °C or less is set to 10 °C/s or more. The average heating rate is preferably 12 °C/s or more. The average heating rate is more preferably 14 °C/s or more. No upper limit is placed on the average heating rate in the temperature range of 250 °C or more and 700 °C or less, but due to production technology constraints, the average heating rate is preferably 50 °C/s or less. The average heating rate is more preferably 40 °C/s or less.

[Retention time in temperature range of 750 °C or more and less than $Ac_3$ point: 200 s or less]

In the present disclosure, it is extremely important to shorten the retention time in the temperature range of 750 °C or more and less than the $Ac_3$ point, which refines the austenite generated during heating and reduces the local concentration of Si, resulting in the suppression of segregation of Si. From the perspective of obtaining such effects, the retention time in the temperature range of 750 °C or more and less than $Ac_3$ is set to 200 s or less. The retention time is preferably 150 s or less. The retention time is more preferably 120 s or less. No lower limit is placed on the retention time in the temperature range of 750 °C or more and less than the $Ac_3$ point, but from the perspective of obtaining a suitable area ratio of martensite and a more suitable TS, the temperature range is preferably 10 s or more.

[Heating temperature $T_2$: $Ac_3$ point or more]

When the heating temperature (annealing temperature) $T_2$ is the $Ac_3$ point or more, the annealing treatment is performed in the two-phase region of ferrite and austenite, yielding a large amount of ferrite after annealing, which makes it difficult to achieve the desired TS and bendability. Moreover, since the ferrite that existed before heating does not disappear at the heating temperature, the local concentration of Si increases, making it difficult to suppress the segregation of Si. Therefore, the heating temperature $T_2$ is set to the $Ac_3$ point or more. The heating temperature $T_2$ is preferably ($Ac_3$ point + 10 °C) or more. The heating temperature $T_2$ is more preferably ($Ac_3$ point + 15 °C) or more. No upper limit is placed on the heating temperature $T_2$, but as the heating temperature $T_2$ increases, the thickness of the surface soft layer after annealing may increase, which may lower the TS. The heating temperature $T_2$ is therefore preferably 950 °C or less. The heating temperature $T_2$ is more preferably 920 °C or less.

The holding time at the heating temperature (annealing temperature) $T_2$ is not particularly limited, but the holding time is preferably 10 s or more. The holding time is preferably 600 s or less.

Here, the heating temperature is measured based on the temperature of the steel sheet surface.

[Oxygen concentration of the atmosphere in the temperature range of 250 °C or more and 700 °C or less: 2 volume ppm or more and 30 volume ppm or less (preferred condition)]

During the annealing of the cold-rolled sheet, by increasing the oxygen concentration in the temperature range of 250 °C or more and 700 °C or less, decarburization progresses through the oxygen in the air, allowing the formation of a surface soft layer, resulting in the achievement of better bendability. From the perspective of obtaining such effects, the oxygen concentration in the temperature range of 250 °C or more and 700 °C or less is preferably 2 volume ppm or more. The oxygen concentration is more preferably 4 volume ppm or more. The oxygen concentration is even more preferably 5 volume ppm or more. On the other hand, as the oxygen concentration in the temperature range of 250 °C or more and 700 °C or less increases, the thickness of the surface soft layer after annealing may increase, which may lower the TS. The oxygen concentration in the temperature range of 250 °C or more and 700 °C or less is therefore preferably 30 volume ppm or less. The oxygen concentration is more preferably 28 volume ppm or less. The oxygen concentration is even more preferably 25 volume ppm or less.

Here, the temperature in the temperature range of 250 °C or more and 700 °C or less is based on the temperature of the steel sheet surface. That is, when the temperature of the steel sheet surface is in the aforementioned temperature range of 250 °C or more and 700 °C or less, the oxygen concentration is adjusted to the aforementioned range.

[Dew point of the atmosphere at the heating temperature $T_2$: -35 °C or more (preferred condition)]

During the annealing of cold-rolled sheets, by raising the dew point of the atmosphere at the heating temperature $T_2$, decarburization progresses through moisture in the air, allowing the formation of a surface soft layer. This results in improved bendability. From the perspective of obtaining such effects, the dew point at the heating temperature $T_2$ is preferably set to -35 °C or more. The dew point is more preferably set to -30 °C or more. The dew point is even more preferably set to -25 °C or more. No upper limit is placed on the dew point at the heating temperature $T_2$, but in order to control the thickness of the surface soft layer after annealing within a suitable range and obtain a more favorable TS, the dew point at the heating temperature $T_2$ is preferably 15 °C or less. The dew point is more preferably 5 °C or less.

Here, the heating temperature $T_2$ is based on the surface temperature of the steel sheet. That is, when the surface temperature of the steel sheet is at the heating temperature $T_2$, the dew point is adjusted to the aforementioned range.

In the cooling after heating, the average cooling rate at the heating temperature $T_2$ or less and above 400 °C is not particularly limited, but the average cooling rate is preferably set to 5 °C/s or more and 30 °C/s or less. Also, in the temperature range of the heating temperature $T_2$ or less and above 400 °C, the high strength steel sheet may be cooled once and the steel sheet temperature may then be raised again.

[2-8] Cooling

[Average cooling rate in the temperature range of 250 °C or more and 400 °C or less: 1.0 °C/s or more]

If the average cooling rate in the temperature range of 250 °C or more and 400 °C or less is below 1.0 °C/s, a large amount of bainitic ferrite is contained after annealing, making it difficult to achieve the desired TS, YR, and bendability. Therefore, the average cooling rate in the temperature range of 250 °C or more and 400 °C or less is set to 1.0 °C/s or more. The average cooling rate is preferably 2.0 °C/s or more. The average cooling rate is more preferably 3.0 °C/s or more. No upper limit is placed on the average cooling rate in the temperature range of 250 °C or more and 400 °C or less, but due to production technology constraints, the average cooling rate is preferably 1000 °C/s or less. The average cooling rate is more preferably 100.0 °C/s or less. The average cooling rate is even more preferably 80.0 °C/s or less.
Here, the average cooling rate is measured based on the temperature of the steel sheet surface.
The cooling method in the temperature range of 250 °C or more and 400 °C or less is not particularly limited. For example, gas jet cooling, mist cooling, water cooling, and air cooling can be applied.

[Holding temperature $T_3$ during the cooling: 100 °C or more and 450 °C or less (preferred condition)]

By holding the high strength steel sheet at a certain temperature during the cooling, TS, YR, and bendability can be brought into a more preferable range. To achieve such effects, the holding temperature $T_3$ during the cooling is preferably set to 100 °C or more. The holding temperature $T_3$ is more preferably 150 °C or more. The holding temperature $T_3$ is even more preferably 200 °C or more. On the other hand, as the holding temperature increases during the cooling, the area ratio of bainitic ferrite increases, leading to a decrease in TS. Therefore, the holding temperature $T_3$ during the cooling is preferably set to 450 °C or less. The holding temperature $T_3$ is more preferably 400 °C or less. The holding temperature $T_3$ is even more preferably 350 °C or less.
Here, the temperature during the cooling is based on the temperature of the steel sheet surface.

[Holding time during the cooling: 5 s or more (preferred condition)]

As a result of holding at a certain temperature during the cooling, TS, YR, and bendability can be brought into a more preferable range. In order to obtain such effects, the holding time at the holding temperature $T_3$ during the cooling is preferably set to 5 seconds or more. The holding time is more preferably 10 seconds or more. The holding time is even more preferably 15 seconds or more. On the other hand, no upper limit is placed on the holding time at the holding temperature $T_3$ during the cooling, but in order to obtain a suitable TS, the holding time at the holding temperature $T_3$ during the cooling is preferably set to 500 seconds or less. The holding time is more preferably 250 seconds or less.
In a case in which the holding temperature $T_3$ is in the temperature range of 250 °C or higher and 400 °C or lower, the average cooling rate in the above temperature range of 250 °C or higher and 400 °C or lower is the average cooling rate during cooling excluding the holding at the holding temperature $T_3$. The average cooling rate can be calculated from the average cooling rate from 250 °C to $T_3$ and the average cooling rate from $T_3$ to 400 °C.

[Cooling stop temperature $T_4$: 250 °C or less (preferred condition)]

If the cooling stop temperature $T_4$ exceeds 250 °C, a large amount of bainitic ferrite is contained after annealing, making it difficult to achieve the desired TS, YR, and bendability. Therefore, the cooling stop temperature is set to 250 °C or less. The cooling stop temperature is preferably 200 °C or less. On the other hand, no lower limit is placed on the cooling stop temperature $T_4$, but from the perspective of productivity, the cooling stop temperature $T_4$ is preferably at least room temperature.
Here, the cooling stop temperature is measured based on the temperature of the steel sheet surface.
The average cooling rate from 250 °C to the cooling stop temperature $T_4$ is not particularly limited, but in order to further increase TS, the average cooling rate in the temperature range of 250 °C or less and $T_4$ or more is preferably set to 1 °C/s or more. The average cooling rate is more preferably 2 °C/s or more. On the other hand, due to constraints in production technology, the average cooling rate in the temperature range of 250 °C or less and $T_4$ or more is preferably 1000 °C/s or less. The average cooling rate is more preferably 150 °C/s or less.
The cold-rolled sheet may be cooled from the cooling stop temperature $T_4$ to room temperature. No limit is placed on the average cooling rate from the cooling stop temperature $T_4$ to room temperature, and the cold-rolled sheet can be cooled to room temperature by any method. Cooling methods such as gas jet cooling, mist cooling, water cooling, and air cooling can be applied.

After being cooled to the cooling stop temperature $T_4$, the annealed cold-rolled sheet may be rolled with an elongation rate of 0.05 % or more and 2.00 % or less. By applying rolling with an elongation rate of 0.05 % or more after cooling to $T_4$, YR can be controlled within the desired range. The elongation rate is more preferably 0.10 % or more. In addition, by applying rolling with an elongation rate of 2.00 % or less after cooling to $T_4$, the volume fraction of retained austenite can be brought into a more preferable range, and the bendability and damage to the sheared end face in a corrosion environment can be brought into a more preferable range. The elongation rate is more preferably 1.00 % or less.

The rolling after cooling to the cooling stop temperature $T_4$ may be performed on a device continuous with the above-described continuous annealing device (online) or on a device that is discontinuous with the above-described continuous annealing device (offline). The desired elongation rate may be achieved in one rolling, or rolling may be performed multiple times to achieve a total elongation rate of 0.05 % or more and 2.00 % or less. The rolling described here generally refers to temper rolling, but if an elongation rate equivalent to temper rolling can be imparted, a processing method such as tension leveling or repeated bending with rollers may be adopted.

[2-9] Reheating

[Reheating temperature: (cooling stop temperature $T_4$ + 50 °C) or more and 450 °C or less (preferred condition)]

After cooling to the cooling stop temperature $T_4$, or after further rolling after cooling to $T_4$, reheating the high strength steel sheet can bring TS, YR, and bendability into a more preferable range. From the perspective of obtaining such effects, the reheating temperature is preferably set to (cooling stop temperature $T_4$ + 50 °C) or more. The reheating temperature is more preferably (cooling stop temperature $T_4$ + 100 °C) or more. The reheating temperature is even more preferably (cooling stop temperature $T_4$ + 150 °C) or more.

On the other hand, as the reheating temperature increases, the tempering of martensite progresses, leading to a decrease in TS. The reheating temperature is therefore preferably 450 °C or less. The reheating temperature is more preferably 400 °C or less. The reheating temperature is even more preferably 380 °C or lower.

Here, the temperature in the above heating temperature range is based on the temperature of the steel sheet surface. That is, when the temperature of the steel sheet surface is within the above heating temperature range, the oxygen concentration is adjusted to the above range.

[Holding time at reheating temperature: 5 s or more (preferred condition)]

As a result of holding at the reheating temperature, TS, YR, and bendability can be brought into a more preferable range. To obtain such effects, the holding time at the reheating temperature is preferably set to 5 s or more. The holding time is more preferably 10 s or more. The holding time is even more preferably 15 s or more. On the other hand, no upper limit is placed on the holding time at the reheating temperature, but to bring TS into a more preferable range, the holding time at the reheating temperature is more preferably set to 500 s or less. The holding time is even more preferably 250 s or less.

The cooling rate from the reheating temperature to room temperature is not particularly limited, and cooling to room temperature may be performed by any method. Cooling methods such as gas jet cooling, mist cooling, water cooling, and air cooling can be applied.

[2-10] Second coating or plating (optional)

The high strength steel sheet produced as described above can be subjected to a coating or plating treatment to become a coated or plated steel sheet. Examples of the coating or plating treatment include hot-dip galvanizing treatment and treatment that forms an alloy after hot-dip galvanizing. Annealing and galvanizing may be continuously performed in one line. In addition, a coated or plated layer may be formed by electroplating such as Zn-Ni electric alloy plating, or hot-dip zinc-aluminum-magnesium alloy coating may be applied. Although the above explanation focuses on the case of galvanizing, the types of plating metals such as Zn plating and Al plating are not particularly limited.

In the case of hot-dip galvanizing treatment, the steel sheet is preferably immersed in a galvanizing bath at 440 °C or more and 500 °C or less, and the coating weight is then preferably adjusted by gas wiping or the like. The hot-dip galvanizing bath is not particularly limited as long as it has the composition of the galvanized layer described above. For example, a plating bath having an Al content of 0.10 mass % or more and 0.23 mass % or less, with the balance being Zn and inevitable impurities, is preferably used.

In the case of alloyed zinc plating treatment, it is preferable to perform the hot-dip galvanizing treatment as described above, and then heat the steel sheet (hot-dip galvanized steel sheet) having the hot-dip galvanized layer to an alloying temperature of 450 °C or more and 600 °C or less to apply alloying treatment. If the alloying temperature is less than 450 °C, the Zn-Fe alloying rate slows down, making alloying difficult. On the other hand, if the alloying temperature exceeds 600 °C, the untransformed austenite transforms into pearlite, making it difficult to achieve a TS of 590 MPa or more. The alloying temperature is preferably 510 °C or more. The alloying temperature is preferably 570 °C or less.

The coating weight of both the steel sheet (hot-dip galvanized steel sheet) with a hot-dip galvanized layer (GI) and the steel sheet (galvannealed steel sheet) with a galvannealed layer (GA) is preferably 20 g/m² to 80 g/m² per side. The coating weight can be adjusted by gas wiping or the like.

When hot-dip aluminum plating, which is a specific example of other metal plating, is performed, the cold-rolled sheet obtained by the aforementioned cold-rolled sheet annealing is immersed in an aluminum molten bath at 660 °C to 730 °C to apply hot-dip aluminum plating treatment, after which the coating weight is adjusted by gas wiping or the like.

Furthermore, when electro galvanizing treatment is applied, the coating thickness is not particularly limited but is preferably adjusted to be in the range of 2 μm to 15 μm.

[2-11] Skin pass rolling (optional)

Skin pass rolling may be performed after the coating or plating treatment.

The rolling reduction in skin pass rolling is preferably 0.05 % or more from the perspective of increasing yield strength. No upper limit is placed on the rolling reduction, but the upper limit is preferably 1.50 % from the perspective of productivity.

Skin pass rolling may be performed online or offline.

The skin pass for the desired rolling reduction may be performed at once or in multiple stages.

From the perspective of productivity, the series of treatments such as annealing and plating treatment described above is preferably carried out on a Continuous Galvanizing Line (CGL).

When high strength galvanized steel sheets are to be traded, they are usually cooled to room temperature before being traded.

Production conditions other than those described above can conform to conventional methods.

[3] Member and automotive part

Next, the member of the present disclosure will be described.

The member of the present disclosure is a member at least partially made of the high strength steel sheet of the present disclosure. The member of the present disclosure can be obtained by forming the high strength steel sheet of the present disclosure into a desired shape by press working or the like. The member of the present disclosure can preferably be used for automotive parts (for example, for automobile frame structural components or automotive reinforcement parts).

The present disclosure also relates to an automotive part made from the member of the present disclosure.

The high strength steel sheet of the present disclosure has a high YR, as well as high bendability, enhanced corrosion resistance at the sheared end face, and a TS of 1180 MPa or more. Therefore, the member of the present disclosure can contribute to the weight reduction of automotive bodies and can be suitably used for general members in automotive parts (for example, for automobile frame structural components or automotive reinforcement parts).

EXAMPLES

[Test Nos. 1 to 47]

Steels having the chemical compositions presented in Table 1, each with the balance being Fe and inevitable impurities, were prepared by steelmaking in a converter and formed into slabs by continuous casting. The obtained slab was heated, subjected to pickling treatment after hot rolling, and then cold rolled. Subsequently, annealing treatment was performed to obtain a high strength cold-rolled sheet (CR). Furthermore, some of the thin steel sheets were subjected to coating or plating treatment to obtain a hot-dip galvanized steel sheet (GI), galvannealed steel sheet (GA), and electrogalvanized steel sheet (EG). The production conditions of the steel sheets are as described in Table 2.

As the hot-dip galvanizing bath, a zinc bath containing 0.14 mass% to 0.19 mass% of Al was used for GI, and a zinc bath containing 0.14 mass% of Al was used for GA, with a bath temperature of 470 °C. The coating weight was about 45 g/m² to 72 g/m² (double-sided coating) for GI and was about 45 g/m² (double-sided coating) for GA. For GA, the Fe concentration in the coated or plated layer was set to 9 mass% or more and 12 mass% or less. In EG, for which the coated or plated layer was a Zn-Ni coated or plated layer, the Ni content in the coated or plated layer was set to 9 mass% or more and 25 mass% or less.

For the steel sheets obtained as described above, the steel microstructure, the standard deviation of the Si concentration/average Si concentration at the 1/2 thickness position, and the thickness of the surface soft layer were measured.

[Steel microstructure]

According to the aforementioned method, the area ratio of martensite and ferrite at the 1/4 thickness position and the volume fraction of retained austenite were determined. The residual microstructure was observed by the method described below. After cutting out a sample so that the thickness cross-section (L cross-section) parallel to the rolling direction of the steel sheet becomes the observation plane, the observation plane was mirror polished using diamond paste. Finish polishing was then performed using colloidal silica, and the sample was further etched with 3 volume% nital to reveal the microstructure. Under a set of conditions including an accelerating voltage of 15 kV, an SEM was used to set the observation position at the 1/4 thickness position of the steel sheet and observe three fields of view at a 5000x magnification within a field of view of 17 $\mu$m $\times$ 23 $\mu$m. From the obtained microstructure images, carbides were identified as the residual microstructure.

[Standard deviation of Si concentration at the 1/2 thickness position/average Si concentration]

According to the aforementioned method, the standard deviation of the Si concentration/average Si concentration at the 1/2 thickness position was calculated.

[Thickness of surface soft layer]

After smoothing a thickness cross-section (L cross-section) of the base steel sheet parallel to the rolling direction by wet polishing, measurements were taken using a Vickers hardness tester at a load of 10 gf, from a position of 1 $\mu$m in the thickness direction from the surface of the base steel sheet to a position of 100 $\mu$m in the thickness direction, at intervals of 1 $\mu$m. Subsequently, measurements were taken at intervals of 20 $\mu$m up to the mid-thickness. The region where the hardness decreases to 85 % or less compared to the hardness at the 1/4 thickness position is defined as the soft layer (surface soft layer), and the thickness of that region in the thickness direction is taken as the thickness of the soft layer.

For the steel sheet obtained as described above, the tensile property, bendability, and damage to the sheared end face in a corrosion environment were evaluated according to the following test methods. The results are listed in Table 3.

[Tensile test]

The tensile test was conducted in accordance with JIS Z 2241. From the obtained steel sheet, a JIS No. 5 test piece was collected so as to be perpendicular to the rolling direction of the steel sheet, a tensile test was conducted under a set of conditions including a crosshead speed of 1.67 $\times$ 10$^{-1}$ mm/s, and YS and TS were measured. In the present disclosure, a TS of 1180 MPa or more was judged as passing. In addition, the dimensional accuracy of a component was judged to be good when the yield ratio (YR), which is an index of the dimensional accuracy of a component, was 65 % or more. YR was calculated using the method described in the above expression (2).

[Bend test]

A bend test was conducted in accordance with JIS Z 2248. From the obtained steel sheet, a strip-shaped test piece with a width of 30 mm and a length of 100 mm was collected so that the direction parallel to the rolling direction of the steel sheet became the axial direction in the bend test. Subsequently, a 90° V-bend test was conducted under a set of conditions including a pressing load of 100 kN and a holding time of 5 seconds. In the present disclosure, the bendability was evaluated by the pass rate of the bend test. The bend test was carried out on five samples at the maximum R where the value R/t obtained by dividing the bending radius (R) by the sheet thickness (t) was 5 or less (for example, when the sheet thickness was 1.2 mm, the bending radius was 6.0 mm). Next, the ridge of the tip of the bend test specimen was evaluated for the presence of cracks. If none of the five samples was cracked, the bendability was judged to be "excellent". If one or more samples among the 5 samples had microfissures of less than 200 $\mu$m, the bendability was judged to be "good". Furthermore, if one or more samples among the 5 samples had microfissures of 200 $\mu$m or more, the bendability was judged to be "poor". Here, the presence of cracks was evaluated by measuring the ridge of the tip of the bend test specimen using a digital microscope (RH-2000: produced by Hirox Co., Ltd.) at 40x magnification.

[Damage to sheared end face in corrosion environment]

From the obtained steel sheet, a strip-shaped test piece with a width (direction orthogonal to rolling direction) of 75 mm and a length (rolling direction) of 18 mm was sheared using a crank press, so that the direction orthogonal to the rolling direction of the steel sheet became the shear separation surface, and collected. The shearing conditions of the crank press were set to a shear angle of 0.5 degrees and a clearance of 10 %. Next, the side that was sheared off during the crank press shearing was ground 2 mm, resulting in a strip-shaped test piece with a width of 75 mm and a length of 16 mm.

Next, after applying a load stress equivalent to YS in a four-point bend test, the sample was immersed in hydrochloric acid with a constant pH of 3 for 120 hours, then taken out and washed with running water. Next, the strip-shaped test piece was removed from the four-point bend test jig, and the test piece was cut parallel to the rolling direction so that the central position of the width of the strip-shaped test piece became the observation position. Then, after mirror polishing the cut surface of the test piece, the shear separation surface of the test piece was observed at 1000x magnification using SEM, and the test piece was judged to be good if the crack length at the shear separation surface of the test piece, i.e., the crack length after immersion in hydrochloric acid, was 300 $\mu$m or less.

[Table 1]

Table 1

Chemical composition (mass%)

| Steel sample ID | C | Si | Mn | P | S | Al | N | O | Ti | Nb | V | Ta | W | B | Cr | Mo | Ni | Co | Cu | Sn | Sb | Ca | Mg | REM | Zr | Tc | Hf | Bi | Ac₃ point (°C) | Notes |
|---|---|---|---|---|---|---|---|---|---|---|---|---|---|---|---|---|---|---|---|---|---|---|---|---|---|---|---|---|---|---|
| A | 0.207 | 1.01 | 2.72 | 0.021 | 0.0040 | 0.039 | 0.0038 | 0.0011 | 0 | 0 | 0 | 0 | 0 | 0 | 0 | 0 | 0 | 0 | 0 | 0 | 0 | 0 | 0 | 0 | 0 | 0 | 0 | 0 | 811 | Conforming steel |
| B | 0.259 | 0.24 | 3.12 | 0.018 | 0.0009 | 0.035 | 0.0031 | 0.0012 | 0 | 0 | 0 | 0 | 0 | 0 | 0 | 0 | 0 | 0 | 0 | 0 | 0 | 0 | 0 | 0 | 0 | 0 | 0 | 0 | 750 | Conforming steel |
| C | 0.102 | 0.72 | 2.30 | 0.045 | 0.0050 | 0.036 | 0.0038 | 0.0007 | 0 | 0 | 0 | 0 | 0 | 0 | 0 | 0 | 0 | 0 | 0 | 0 | 0 | 0 | 0 | 0 | 0 | 0 | 0 | 0 | 854 | Conforming steel |
| D | 0.306 | 0.99 | 3.14 | 0.018 | 0.0021 | 0.031 | 0.0042 | 0.0011 | 0 | 0 | 0 | 0 | 0 | 0 | 0 | 0 | 0 | 0 | 0 | 0 | 0 | 0 | 0 | 0 | 0 | 0 | 0 | 0 | 773 | Conforming steel |
| E | 0.284 | 0.63 | 3.14 | 0.010 | 0.0030 | 0.047 | 0.0046 | 0.0008 | 0 | 0 | 0 | 0 | 0 | 0 | 0 | 0 | 0 | 0 | 0 | 0 | 0 | 0 | 0 | 0 | 0 | 0 | 0 | 0 | 762 | Conforming steel |
| F | 0.027 | 1.11 | 2.57 | 0.045 | 0.0031 | 0.024 | 0.0048 | 0.0004 | 0 | 0 | 0 | 0 | 0 | 0 | 0 | 0 | 0 | 0 | 0 | 0 | 0 | 0 | 0 | 0 | 0 | 0 | 0 | 0 | 890 | Comparative steel |
| G | 0.105 | 2.66 | 2.59 | 0.013 | 0.0029 | 0.039 | 0.0044 | 0.0008 | 0 | 0 | 0 | 0 | 0 | 0 | 0 | 0 | 0 | 0 | 0 | 0 | 0 | 0 | 0 | 0 | 0 | 0 | 0 | 0 | 910 | Comparative steel |
| H | 0.122 | 1.15 | 0.08 | 0.037 | 0.0035 | 0.042 | 0.0032 | 0.0005 | 0 | 0 | 0 | 0 | 0 | 0 | 0 | 0 | 0 | 0 | 0 | 0 | 0 | 0 | 0 | 0 | 0 | 0 | 0 | 0 | 931 | Comparative steel |
| I | 0.105 | 0.98 | 5.11 | 0.004 | 0.0018 | 0.036 | 0.0038 | 0.0009 | 0 | 0 | 0 | 0 | 0 | 0 | 0 | 0 | 0 | 0 | 0 | 0 | 0 | 0 | 0 | 0 | 0 | 0 | 0 | 0 | 752 | Comparative steel |
| J | 0.194 | 1.26 | 3.04 | 0.007 | 0.0017 | 0.038 | 0.0046 | 0.0011 | 0 | 0 | 0 | 0 | 0 | 0 | 0 | 0 | 0 | 0 | 0 | 0 | 0 | 0 | 0 | 0 | 0 | 0 | 0 | 0 | 820 | Comparative steel |
| K | 0.140 | 1.12 | 3.03 | 0.024 | 0.0029 | 0.032 | 0.0047 | 0.0004 | 0.036 | 0 | 0 | 0 | 0 | 0 | 0 | 0 | 0 | 0 | 0 | 0 | 0 | 0 | 0 | 0 | 0 | 0 | 0 | 0 | 838 | Conforming steel |
| L | 0.186 | 0.46 | 2.91 | 0.009 | 0.0030 | 0.028 | 0.0038 | 0.0007 | 0 | 0.023 | 0.145 | 0 | 0 | 0 | 0 | 0 | 0 | 0 | 0 | 0 | 0 | 0 | 0 | 0 | 0 | 0 | 0 | 0 | 773 | Conforming steel |
| M | 0.193 | 1.15 | 2.61 | 0.007 | 0.0050 | 0.028 | 0.0061 | 0.0007 | 0 | 0 | 0 | 0.04 | 0.07 | 0 | 0 | 0 | 0 | 0 | 0 | 0 | 0 | 0 | 0 | 0 | 0 | 0 | 0 | 0 | 812 | Conforming steel |
| N | 0.240 | 1.13 | 2.83 | 0.012 | 0.0006 | 0.040 | 0.0048 | 0.0011 | 0 | 0.018 | 0 | 0.08 | 0 | 0 | 0 | 0 | 0 | 0 | 0 | 0 | 0 | 0 | 0 | 0 | 0 | 0 | 0 | 0 | 801 | Conforming steel |
| O | 0.213 | 0.13 | 2.72 | 0.043 | 0.0026 | 0.035 | 0.0031 | 0.0009 | 0.028 | 0 | 0 | 0 | 0 | 0.0032 | 0 | 0 | 0 | 0 | 0 | 0 | 0 | 0 | 0 | 0 | 0 | 0 | 0 | 0 | 796 | Conforming steel |
| P | 0.238 | 0.90 | 2.94 | 0.023 | 0.0011 | 0.012 | 0.0062 | 0.0004 | 0 | 0 | 0 | 0 | 0 | 0 | 0 | 0 | 0 | 0 | 0 | 0 | 0 | 0 | 0 | 0 | 0 | 0 | 0 | 0 | 779 | Conforming steel |
| Q | 0.186 | 0.54 | 3.39 | 0.042 | 0.0003 | 0.031 | 0.0049 | 0.0011 | 0 | 0 | 0 | 0 | 0 | 0 | 0.43 | 0 | 0 | 0 | 0 | 0 | 0 | 0 | 0 | 0 | 0 | 0 | 0 | 0 | 790 | Conforming steel |
| R | 0.244 | 0.79 | 3.09 | 0.007 | 0.0004 | 0.022 | 0.0028 | 0.0003 | 0 | 0 | 0 | 0 | 0 | 0 | 0 | 0.10 | 0 | 0 | 0 | 0 | 0 | 0 | 0 | 0 | 0 | 0 | 0 | 0 | 763 | Conforming steel |
| S | 0.203 | 0.78 | 2.82 | 0.021 | 0.0041 | 0.031 | 0.0045 | 0.0005 | 0 | 0 | 0 | 0 | 0 | 0 | 0 | 0 | 0.18 | 0 | 0 | 0 | 0 | 0 | 0 | 0 | 0 | 0 | 0 | 0 | 796 | Conforming steel |
| T | 0.188 | 0.75 | 2.75 | 0.046 | 0.0038 | 0.050 | 0.0047 | 0.0009 | 0 | 0 | 0 | 0 | 0 | 0 | 0 | 0 | 0 | 0.008 | 0 | 0 | 0 | 0 | 0 | 0 | 0 | 0 | 0 | 0 | 823 | Conforming steel |
| U | 0.129 | 0.98 | 2.96 | 0.015 | 0.0005 | 0.031 | 0.0030 | 0.0011 | 0 | 0 | 0 | 0 | 0 | 0 | 0 | 0 | 0 | 0 | 0.11 | 0 | 0 | 0 | 0 | 0 | 0 | 0 | 0 | 0 | 815 | Conforming steel |
| V | 0.350 | 0.73 | 2.70 | 0.033 | 0.0050 | 0.034 | 0.0039 | 0.0011 | 0 | 0 | 0 | 0 | 0 | 0 | 0 | 0 | 0 | 0 | 0 | 0.099 | 0 | 0 | 0 | 0 | 0 | 0 | 0 | 0 | 778 | Conforming steel |
| W | 0.181 | 0.99 | 2.84 | 0.011 | 0.0047 | 0.022 | 0.0035 | 0.0004 | 0 | 0 | 0 | 0 | 0 | 0 | 0 | 0 | 0 | 0 | 0 | 0 | 0.013 | 0 | 0 | 0 | 0 | 0 | 0 | 0 | 799 | Conforming steel |
| X | 0.216 | 1.07 | 3.16 | 0.013 | 0.0009 | 0.029 | 0.0038 | 0.0021 | 0 | 0 | 0 | 0 | 0 | 0 | 0 | 0 | 0 | 0 | 0 | 0 | 0 | 0.0014 | 0.0050 | 0.0048 | 0 | 0 | 0 | 0 | 789 | Conforming steel |
| Y | 0.120 | 0.89 | 2.65 | 0.030 | 0.0021 | 0.034 | 0.0041 | 0.0013 | 0 | 0 | 0 | 0 | 0 | 0 | 0 | 0 | 0 | 0 | 0 | 0 | 0 | 0 | 0 | 0 | 0.078 | 0 | 0 | 0 | 835 | Conforming steel |
| Z | 0.202 | 0.77 | 2.88 | 0.016 | 0.0026 | 0.034 | 0.0034 | 0.0005 | 0 | 0 | 0 | 0 | 0 | 0 | 0 | 0 | 0 | 0 | 0 | 0 | 0 | 0 | 0 | 0 | 0 | 0.075 | 0.07 | 0.098 | 792 | Conforming steel |
| a | 0.080 | 0.80 | 3.01 | 0.004 | 0.0027 | 0.034 | 0.0024 | 0.0012 | 0.022 | 0 | 0 | 0 | 0 | 0.0013 | 0 | 0 | 0 | 0 | 0 | 0 | 0 | 0 | 0 | 0 | 0 | 0 | 0 | 0 | 823 | Conforming steel |
| b | 0.450 | 0.70 | 2.00 | 0.005 | 0.0010 | 0.047 | 0.0055 | 0.0009 | 0 | 0 | 0 | 0 | 0 | 0 | 0 | 0 | 0 | 0 | 0 | 0 | 0 | 0 | 0 | 0 | 0 | 0 | 0 | 0 | 767 | Conforming steel |
| c | 0.521 | 0.55 | 1.80 | 0.009 | 0.0011 | 0.052 | 0.0049 | 0.0011 | 0 | 0 | 0 | 0 | 0 | 0 | 0 | 0 | 0 | 0 | 0 | 0 | 0 | 0 | 0 | 0 | 0 | 0 | 0 | 0 | 761 | Comparative steel |
| d | 0.125 | 0.02 | 2.68 | 0.015 | 0.0012 | 0.042 | 0.0033 | 0.0011 | 0.019 | 0 | 0 | 0 | 0 | 0 | 0 | 0 | 0 | 0 | 0 | 0 | 0 | 0 | 0 | 0 | 0 | 0 | 0 | 0 | 786 | Conforming steel |
| e | 0.110 | 2.37 | 2.55 | 0.008 | 0.0029 | 0.055 | 0.0027 | 0.0013 | 0 | 0 | 0 | 0 | 0 | 0 | 0 | 0 | 0 | 0 | 0 | 0 | 0 | 0 | 0 | 0 | 0 | 0 | 0 | 0 | 900 | Conforming steel |
| f | 0.122 | 0.54 | 1.00 | 0.010 | 0.0008 | 0.042 | 0.0024 | 0.0015 | 0 | 0 | 0 | 0 | 0 | 0.0006 | 0 | 0 | 0 | 0 | 0 | 0 | 0 | 0 | 0 | 0 | 0 | 0 | 0 | 0 | 865 | Conforming steel |
| g | 0.080 | 0.45 | 4.49 | 0.009 | 0.0008 | 0.500 | 0.0044 | 0.0010 | 0 | 0 | 0 | 0 | 0 | 0 | 0 | 0 | 0 | 0 | 0 | 0 | 0 | 0 | 0 | 0 | 0 | 0 | 0 | 0 | 944 | Conforming steel |
| h | 0.173 | 0.93 | 2.79 | 0.020 | 0.0029 | 0.031 | 0.0028 | 0.0008 | 0.100 | 0 | 0 | 0 | 0 | 0 | 0 | 0 | 0 | 0 | 0 | 0 | 0 | 0 | 0 | 0 | 0 | 0 | 0 | 0 | 850 | Conforming steel |
| i | 0.215 | 0.80 | 3.05 | 0.042 | 0.0019 | 0.049 | 0.0035 | 0.0008 | 0 | 0.100 | 0 | 0 | 0 | 0 | 0 | 0 | 0 | 0 | 0 | 0 | 0 | 0 | 0 | 0 | 0 | 0 | 0 | 0 | 809 | Conforming steel |
| j | 0.183 | 1.07 | 2.89 | 0.015 | 0.0041 | 0.023 | 0.0028 | 0.0007 | 0.025 | 0 | 0 | 0 | 0 | 0.0080 | 0 | 0 | 0 | 0 | 0 | 0 | 0 | 0 | 0 | 0 | 0 | 0 | 0 | 0 | 814 | Conforming steel |
| k | 0.192 | 0.46 | 3.09 | 0.039 | 0.0041 | 0.040 | 0.0042 | 0.0012 | 0 | 0 | 0 | 0 | 0 | 0 | 0.90 | 0 | 0 | 0 | 0 | 0 | 0 | 0 | 0 | 0 | 0 | 0 | 0 | 0 | 782 | Conforming steel |
| l | 0.182 | 0.96 | 2.71 | 0.008 | 0.0019 | 0.025 | 0.0047 | 0.0005 | 0 | 0 | 0 | 0 | 0 | 0 | 0 | 0.80 | 0 | 0 | 0 | 0 | 0 | 0 | 0 | 0 | 0 | 0 | 0 | 0 | 826 | Conforming steel |
| m | 0.175 | 0.27 | 2.92 | 0.033 | 0.0007 | 0.027 | 0.0027 | 0.0010 | 0 | 0 | 0 | 0 | 0 | 0 | 0 | 0 | 0.80 | 0 | 0 | 0 | 0 | 0 | 0 | 0 | 0 | 0 | 0 | 0 | 771 | Conforming steel |
| n | 0.185 | 1.00 | 3.01 | 0.021 | 0.0015 | 0.029 | 0.0026 | 0.0007 | 0 | 0 | 0 | 0 | 0 | 0 | 0 | 0 | 0 | 0 | 0.80 | 0 | 0 | 0 | 0 | 0 | 0 | 0 | 0 | 0 | 787 | Conforming steel |
| o | 0.204 | 0.80 | 3.03 | 0.023 | 0.0001 | 0.029 | 0.0031 | 0.0010 | 0 | 0 | 0 | 0 | 0 | 0 | 0 | 0 | 0 | 0 | 0 | 0 | 0.100 | 0 | 0 | 0 | 0 | 0 | 0 | 0 | 791 | Conforming steel |
| p | 0.168 | 0.18 | 3.16 | 0.017 | 0.0037 | 0.038 | 0.0033 | 0.0007 | 0 | 0 | 0 | 0 | 0 | 0 | 0 | 0 | 0 | 0 | 0 | 0 | 0 | 0.0050 | 0 | 0 | 0 | 0 | 0 | 0 | 767 | Conforming steel |

Underlined values are outside of the range.

[Table 2]

Table 2

| No. | Steel sample ID | Cooling conditions after casting | | Hot rolling conditions | | | | Heating process | | | | | | Cooling process | | | Reheating process | | Coating or plating treatment conditions | Notes |
|---|---|---|---|---|---|---|---|---|---|---|---|---|---|---|---|---|---|---|---|---|
| | | Average cooling rate at 500 °C or more and 700 °C or less (°C/hr) | Average cooling rate at 400 °C or more and less than 500 °C (°C/hr) | Slab heating temperature T₁ (°C) | Retention time in temperature range of 1100 °C or more and T₁ or less (min) | Coiling temperature (°C) | Retention time in temperature range of 300 °C or more and 400 °C or less in cooling after winding (s) | Average heating rate in temperature range of 250 °C or more and 700 °C or less (°C/s) | Retention time in temperature range of 750 °C or more and less than AC₃ point (s) | Heating temperature T₂ (°C) | Oxygen concentration in temperature range of 250 °C or more and 700 °C or less (ppm) | Dew point at heating temperature T₂ (°C) | Average cooling rate in temperature range of 250 °C or more and 400 °C or less (°C/s) | Holding temperature T₃ (°C) | Holding time (s) | Cooling stop temperature T₄ (°C) | Reheating temperature (°C) | Holding time at reheating temperature (s) | Type | |
| 1 | A | 7.0 | 5.0 | 1200 | 40 | 450 | 5000 | 20 | 30 | 840 | 13 | -17 | 14.7 | - | - | 50 | 350 | 50 | CR | Example |
| 2 | A | 7.0 | 5.0 | 1200 | 40 | 450 | 5000 | 20 | 30 | 840 | 13 | -17 | 14.7 | 300 | 70 | room temperature | - | - | CR | Example |
| 3 | A | 7.0 | 5.0 | 1200 | 40 | 450 | 5000 | 20 | 30 | 840 | 13 | -17 | 14.7 | 150 | 120 | room temperature | - | - | CR | Example |
| 4 | B | 25.0 | 21.0 | 1250 | 50 | 550 | 10000 | 40 | 100 | 850 | 17 | -11 | 9.8 | - | - | 80 | 250 | 100 | GA | Example |
| 5 | C | 10.0 | 7.0 | 1250 | 50 | 500 | 10000 | 20 | 60 | 890 | 15 | -13 | 5.0 | 350 | 60 | room temperature | 300 | 60 | GA | Example |
| 6 | C | 10.0 | 7.0 | 1250 | 50 | 500 | 10000 | 20 | 60 | 890 | 15 | -13 | 5.0 | 200 | 100 | - | - | - | GA | Comp. Example |
| 7 | C | 10.0 | 7.0 | 1250 | 50 | 500 | 10000 | 20 | 60 | 890 | 15 | -13 | 5.0 | - | - | room temperature | - | - | GA | Comp. Example |
| 8 | C | **1.0** | 7.0 | 1250 | 50 | 500 | 10000 | 20 | 60 | 890 | 11 | -13 | 5.0 | - | - | room temperature | 300 | 60 | GA | Comp. Example |
| 9 | C | 10.0 | **0.5** | 1250 | 50 | 500 | 10000 | 20 | 60 | 890 | 11 | -13 | 5.0 | - | - | room temperature | 300 | 60 | GA | Comp. Example |
| 10 | C | 10.0 | 7.0 | **1050** | 50 | 500 | 10000 | 20 | 60 | 890 | 11 | -13 | 5.0 | - | - | room temperature | 300 | 60 | GA | Comp. Example |
| 11 | C | 10.0 | 7.0 | 1250 | **5** | 500 | 10000 | 20 | 60 | 890 | 11 | -13 | 5.0 | - | - | room temperature | 300 | 60 | GA | Comp. Example |
| 12 | C | 10.0 | 7.0 | 1250 | 50 | **700** | 10000 | 20 | 60 | 890 | 11 | -13 | 5.0 | - | - | room temperature | 300 | 60 | GA | Comp. Example |
| 13 | C | 10.0 | 7.0 | 1250 | 50 | 500 | **100000** | 20 | 60 | 890 | 11 | -13 | 5.0 | - | - | room temperature | 300 | 60 | GA | Comp. Example |
| 14 | C | 10.0 | 7.0 | 1250 | 50 | 500 | 10000 | **5** | 60 | 890 | 11 | -13 | 5.0 | - | - | room temperature | 300 | 60 | GA | Comp. Example |
| 15 | C | 10.0 | 7.0 | 1250 | 50 | 500 | 10000 | 20 | **500** | 890 | 11 | -13 | 5.0 | - | - | room temperature | 300 | 60 | GA | Comp. Example |
| 16 | C | 10.0 | 7.0 | 1250 | 50 | 500 | 10000 | 20 | 60 | 890 | 11 | -13 | 5.0 | - | - | room temperature | 300 | 60 | GA | Comp. Example |
| 17 | C | 10.0 | 7.0 | 1200 | 50 | 500 | 10000 | 20 | 60 | 890 | 11 | -13 | 5.0 | - | - | room temperature | 300 | 60 | GA | Comp. Example |
| 18 | D | 15.0 | 13.0 | 1200 | 40 | 500 | 10000 | 18 | 30 | **750** | 11 | -13 | **0.5** | - | - | room temperature | 250 | 100 | GA | Comp. Example |
| 19 | E | 15.0 | 13.0 | 1250 | 50 | 450 | 5000 | 10 | 60 | 820 | 12 | -5 | 9.8 | - | - | room temperature | 250 | 100 | GA | Example |
| 20 | F | 15.0 | 13.0 | 1250 | 50 | 500 | 10000 | 18 | 60 | 900 | 11 | -25 | 20.4 | - | - | 50 | 200 | 90 | GA | Comp. Example |
| 21 | G | 15.0 | 13.0 | 1250 | 50 | 500 | 10000 | 18 | 60 | 1000 | 14 | -13 | 3.0 | - | - | 50 | 200 | 90 | GA | Comp. Example |
| 22 | H | 15.0 | 13.0 | 1250 | 50 | 500 | 10000 | 18 | 60 | 950 | 14 | -13 | 3.0 | - | - | 50 | 200 | 90 | GA | Comp. Example |
| 23 | I | 15.0 | 13.0 | 1250 | 50 | 500 | 10000 | 18 | 60 | 800 | 14 | -13 | 3.0 | - | - | 50 | 200 | 90 | GA | Comp. Example |
| 24 | J | 15.0 | 13.0 | 1250 | 50 | 300 | 8000 | 12 | 60 | 840 | 22 | 5 | 19.7 | - | - | 200 | 400 | 100 | CR | Example |
| 25 | K | 15.0 | 13.0 | 1250 | 50 | 450 | 8000 | 17 | 30 | 850 | 18 | -2 | 14.5 | - | - | 50 | 250 | 100 | CR | Example |
| 26 | L | 15.0 | 13.0 | 1250 | 50 | 450 | 8000 | 48 | 100 | 800 | 27 | -19 | 9.7 | - | - | room temperature | 300 | 50 | GA | Example |
| 27 | M | 15.0 | 13.0 | 1250 | 40 | 450 | 5000 | 16 | 100 | 850 | 14 | -25 | 10.1 | - | - | 50 | 250 | 50 | EG | Example |
| 28 | N | 7.0 | 5.0 | 1200 | 40 | 450 | 5000 | 23 | 100 | 825 | 12 | -16 | 15.1 | - | - | room temperature | 300 | 100 | GA | Example |

Underlined values are outside of the range.

Table 2 (continued)

| No. | Steel sample ID | Cooling conditions after casting: Average cooling rate at 500 °C or more and 700 °C or less (°C/hr) | Average cooling rate at 400 °C or more and less than 500 °C (°C/hr) | Hot rolling conditions: Slab heating temperature $T_1$ (°C) | Retention time in temperature range of 1100 °C or more and $T_1$ or less (min) | Coiling temperature (°C) | Retention time in temperature range of 300 °C or more and 400 °C or less in cooling after winding (s) | Heating process: Average heating rate in temperature range of 250 °C or more and 700 °C or less (°C/s) | Retention time in temperature range of 750 °C or more and less than $AC_3$ point (s) | Heating temperature $T_2$ (°C) | Oxygen concentration in temperature range of 250 °C or more and 700 °C or less (ppm) | Dew point at heating temperature $T_2$ (°C) | Average cooling rate in temperature range of 250 °C or more and 400 °C or less (°C/s) | Holding temperature $T_3$ (°C) | Holding time (s) | Cooling stop temperature $T_4$ (°C) | Reheating process: Reheating temperature (°C) | Holding time at reheating temperature (s) | Coating or plating treatment conditions: Type | Notes |
|---|---|---|---|---|---|---|---|---|---|---|---|---|---|---|---|---|---|---|---|---|
| 29 | O | 3.0 | 1.0 | 1200 | 100 | 450 | 5000 | 16 | 30 | 830 | 1 | −16 | 10.3 | - | - | 80 | 250 | 100 | GA | Example |
| 30 | P | 20.0 | 15.0 | 1200 | 40 | 550 | 2000 | 24 | 30 | 840 | 34 | −16 | 29.8 | - | - | room temperature | 250 | 100 | GA | Example |
| 31 | Q | 7.0 | 4.0 | 1150 | 40 | 550 | 5000 | 15 | 30 | 850 | 12 | −36 | 14.5 | - | - | 80 | 300 | 50 | GA | Example |
| 32 | R | 20.0 | 13.0 | 1200 | 100 | 600 | 5000 | 14 | 200 | 830 | 11 | −25 | 15.2 | - | - | 100 | 300 | 100 | GA | Example |
| 33 | S | 7.0 | 5.0 | 1150 | 20 | 550 | 10000 | 14 | 60 | 870 | 20 | −24 | 30.3 | - | - | 50 | 250 | 100 | GA | Example |
| 34 | T | 15.0 | 13.0 | 1150 | 40 | 450 | 2000 | 25 | 60 | 880 | 11 | −13 | 9.9 | - | - | 50 | 250 | 100 | CR | Example |
| 35 | U | 7.0 | 4.0 | 1200 | 100 | 450 | 5000 | 14 | 60 | 900 | 12 | −15 | 7.9 | - | - | 50 | 350 | 30 | CR | Example |
| 36 | W | 20.0 | 13.0 | 1150 | 50 | 450 | 10000 | 26 | 100 | 900 | 12 | −20 | 8.4 | - | - | 150 | 250 | 100 | GA | Example |
| 37 | V | 20.0 | 13.0 | 1200 | 50 | 400 | 5000 | 31 | 60 | 850 | 11 | −15 | 3.1 | - | - | 50 | 250 | 100 | GA | Example |
| 38 | X | 15.0 | 13.0 | 1250 | 40 | 450 | 10000 | 27 | 60 | 920 | 22 | −16 | 10.1 | - | - | 50 | 250 | 100 | GA | Example |
| 39 | Y | 20.0 | 13.0 | 1300 | 50 | 550 | 50000 | 34 | 60 | 880 | 18 | −16 | 15.1 | - | - | 250 | 450 | 5 | GI | Example |
| 40 | Z | 15.0 | 13.0 | 1250 | 100 | 500 | 8000 | 27 | 100 | 850 | 27 | −16 | 10.3 | - | - | room temperature | 250 | 100 | GA | Example |
| 41 | a | 10.0 | 7.0 | 1250 | 50 | 500 | 10000 | 20 | 60 | 890 | 15 | −10 | 5.0 | - | - | 50 | 200 | 90 | GA | Example |
| 42 | b | 10.0 | 7.0 | 1250 | 50 | 500 | 10000 | 20 | 60 | 890 | 15 | −10 | 5.0 | - | - | 100 | 300 | 90 | GA | Example |
| 43 | c | 10.0 | 7.0 | 1250 | 50 | 500 | 10000 | 20 | 60 | 890 | 15 | −10 | 5.0 | - | - | room temperature | 350 | 90 | GA | Example |
| 44 | d | 10.0 | 7.0 | 1250 | 50 | 500 | 10000 | 20 | 60 | 890 | 15 | −10 | 5.0 | - | - | 100 | 200 | 90 | GA | Example |
| 45 | e | 10.0 | 7.0 | 1250 | 50 | 500 | 10000 | 20 | 60 | 910 | 15 | −10 | 5.0 | - | - | room temperature | 200 | 90 | GA | Example |
| 46 | f | 10.0 | 7.0 | 1250 | 50 | 500 | 10000 | 20 | 60 | 890 | 15 | −10 | 5.0 | - | - | 100 | 200 | 90 | GA | Example |
| 47 | g | 10.0 | 7.0 | 1250 | 50 | 500 | 10000 | 20 | 60 | 1000 | 15 | −10 | 5.0 | - | - | 50 | 200 | 90 | GA | Example |
| 48 | h | 10.0 | 7.0 | 1250 | 50 | 500 | 10000 | 20 | 60 | 890 | 15 | −10 | 5.0 | - | - | 50 | 200 | 90 | GA | Example |
| 49 | i | 10.0 | 7.0 | 1250 | 50 | 500 | 10000 | 20 | 60 | 890 | 15 | −10 | 5.0 | - | - | 50 | 200 | 90 | GA | Example |
| 50 | j | 10.0 | 7.0 | 1250 | 50 | 500 | 10000 | 20 | 60 | 890 | 15 | −10 | 5.0 | - | - | 50 | 200 | 90 | GA | Example |
| 51 | k | 10.0 | 7.0 | 1250 | 50 | 500 | 10000 | 20 | 60 | 890 | 15 | −10 | 5.0 | - | - | 50 | 200 | 90 | GA | Example |
| 52 | l | 10.0 | 7.0 | 1250 | 50 | 500 | 10000 | 20 | 60 | 890 | 15 | −10 | 5.0 | - | - | 50 | 200 | 90 | GA | Example |
| 53 | m | 10.0 | 7.0 | 1250 | 50 | 500 | 10000 | 20 | 60 | 890 | 15 | −10 | 5.0 | - | - | 50 | 200 | 90 | GA | Example |
| 54 | n | 10.0 | 7.0 | 1250 | 50 | 500 | 10000 | 20 | 60 | 890 | 15 | −10 | 5.0 | - | - | 50 | 200 | 90 | GA | Example |
| 55 | o | 10.0 | 7.0 | 1250 | 50 | 500 | 10000 | 20 | 60 | 890 | 15 | −10 | 5.0 | - | - | 50 | 300 | 90 | GA | Example |
| 56 | p | 10.0 | 7.0 | 1250 | 50 | 500 | 10000 | 20 | 60 | 890 | 15 | −10 | 5.0 | - | - | 50 | 300 | 90 | GA | Example |

Underlined values are outside of the range.

[Table 3]

[Table 3]

Table 3

| No. | Steel sample ID | Area ratio of M (%) | Area ratio of $\alpha$ (%) | Volume fraction of retained $\gamma$ (%) | Balance microstructure | Standard deviation of Si concentration /average Si concentration | Thickness of surface soft layer ($\mu$m) | YS (MPa) | TS (MPa) | YR (%) | Bendability | Damage to shear end face in a corrosion environment | Notes |
|---|---|---|---|---|---|---|---|---|---|---|---|---|---|
| 1 | A | 95.0 | 0.0 | 2.6 | $\theta$ | 0.63 | 13 | 1171 | 1521 | 77 | excellent | pass | Example |
| 2 | A | 87.0 | 6.0 | 4.8 | $\theta$ | 0.63 | 10 | 1012 | 1488 | 68 | excellent | pass | Example |
| 3 | A | 89.0 | 4.0 | 3.9 | $\theta$ | 0.63 | 22 | 1091 | 1515 | 72 | excellent | pass | Example |
| 4 | B | 89.0 | 3.0 | 3.5 | $\theta$ | 0.77 | 9 | 1266 | 1809 | 70 | excellent | pass | Example |
| 5 | C | 91.0 | 1.0 | 4.5 | $\theta$ | 0.58 | 17 | 865 | 1254 | 69 | excellent | pass | Example |
| 6 | C | 79.0 | 10.0 | 8.6 | $\theta$ | 0.58 | 8 | 779 | 1199 | 65 | excellent | pass | Example |
| 7 | C | 85.0 | 6.0 | 5.8 | $\theta$ | 0.58 | 11 | 818 | 1221 | 67 | excellent | pass | Example |
| 8 | C | 87.0 | 5.0 | 4.5 | $\theta$ | 1.62 | 19 | 943 | 1241 | 76 | excellent | fail | Comparative Example |
| 9 | C | 88.0 | 1.0 | 4.7 | $\theta$ | 1.34 | 12 | 904 | 1190 | 76 | excellent | fail | Comparative Example |
| 10 | C | 90.0 | 0.0 | 5.8 | $\theta$ | 1.36 | 15 | 909 | 1196 | 76 | excellent | fail | Comparative Example |
| 11 | C | 84.0 | 6.0 | 5.2 | $\theta$ | 1.97 | 19 | 884 | 1228 | 72 | excellent | fail | Comparative Example |
| 12 | C | 87.0 | 5.0 | 5.0 | $\theta$ | 1.42 | 19 | 1041 | 1211 | 86 | excellent | fail | Comparative Example |
| 13 | C | 89.0 | 1.0 | 5.9 | $\theta$ | 1.27 | 20 | 963 | 1235 | 78 | excellent | fail | Comparative Example |
| 14 | C | 91.0 | 0.0 | 5.4 | $\theta$ | 1.85 | 21 | 998 | 1203 | 83 | excellent | fail | Comparative Example |
| 15 | C | 90.0 | 1.0 | 5.3 | $\theta$ | 1.76 | 9 | 848 | 1229 | 69 | excellent | fail | Comparative Example |

(continued)

| No. | Steel sample ID | Area ratio of M (%) | Area ratio of α (%) | Volume fraction of retained γ (%) | Balance microstructure | Standard deviation of Si concentration /average Si concentration | Thickness of surface soft layer (μm) | YS (MPa) | TS (MPa) | YR (%) | Bendability | Damage to shear end face in a corrosion environment | Notes |
|---|---|---|---|---|---|---|---|---|---|---|---|---|---|
| 16 | C | 21.0 | 73.0 | 4.6 | θ | 1.67 | 12 | 739 | 1026 | 72 | poor | fail | Comparative Example |
| 17 | C | 37.0 | 55.0 | 5.3 | θ | 0.05 | 10 | 688 | 1146 | 60 | poor | pass | Comparative Example |
| 18 | D | 96.0 | 0.0 | 1.6 | θ | 0.46 | 18 | 1610 | 2012 | 80 | excellent | pass | Example |
| 19 | E | 89.0 | 2.0 | 4.1 | θ | 0.23 | 21 | 1443 | 1826 | 79 | excellent | pass | Example |
| 20 | F | 24.0 | 71.0 | 0.0 | θ | 0.28 | 18 | 870 | 1036 | 84 | excellent | pass | Comparative Example |
| 21 | G | 71.0 | 5.0 | 20.2 | θ | 1.73 | 9 | 781 | 1202 | 65 | poor | fail | Comparative Example |
| 22 | H | 17.0 | 80.0 | 0.0 | θ | 0.09 | 18 | 863 | 1003 | 86 | excellent | pass | Comparative Example |
| 23 | I | 65.0 | 12.0 | 21.3 | θ | 1.65 | 21 | 790 | 1215 | 65 | poor | fail | Comparative Example |
| 24 | J | 86.0 | 2.0 | 10.5 | θ | 0.54 | 11 | 1119 | 1473 | 76 | excellent | pass | Example |
| 25 | K | 87.0 | 3.0 | 5.7 | θ | 0.77 | 24 | 1087 | 1412 | 77 | good | pass | Example |
| 26 | L | 93.0 | 0.0 | 3.5 | θ | 0.19 | 9 | 1077 | 1539 | 70 | excellent | pass | Example |
| 27 | M | 91.0 | 2.0 | 5.2 | θ | 0.62 | 13 | 915 | 1366 | 67 | excellent | pass | Example |
| 28 | N | 88.0 | 5.0 | 3.1 | θ | 0.66 | 22 | 1261 | 1828 | 69 | good | pass | Example |
| 29 | O | 87.0 | 8.0 | 3.6 | θ | 0.25 | 16 | 1391 | 1581 | 88 | good | pass | Example |
| 30 | P | 89.0 | 6.0 | 3.6 | θ | 0.18 | 14 | 1689 | 1898 | 89 | excellent | pass | Example |
| 31 | Q | 85.0 | 7.0 | 3.6 | θ | 0.76 | 20 | 1363 | 1867 | 73 | good | pass | Example |
| 32 | R | 89.0 | 8.0 | 2.6 | θ | 0.00 | 10 | 1370 | 1851 | 74 | excellent | pass | Example |
| 33 | S | 92.0 | 2.0 | 2.9 | θ | 0.66 | 10 | 1215 | 1578 | 77 | good | pass | Example |

| No. | Steel sample ID | Area ratio of M (%) | Area ratio of $\alpha$ (%) | Volume fraction of retained $\gamma$ (%) | Balance microstructure | Standard deviation of Si concentration /average Si concentration | Thickness of surface soft layer ($\mu$m) | YS (MPa) | TS (MPa) | YR (%) | Bendability | Damage to shear end face in a corrosion environment | Notes |
|---|---|---|---|---|---|---|---|---|---|---|---|---|---|
| 34 | T | 95.0 | 0.0 | 2.4 | $\theta$ | 0.54 | 23 | 1220 | 1564 | 78 | excellent | pass | Example |
| 35 | U | 88.0 | 4.0 | 4.6 | $\theta$ | 0.66 | 11 | 1218 | 1369 | 89 | good | pass | Example |
| 36 | V | 97.0 | 0.0 | 1.5 | $\theta$ | 0.61 | 12 | 1279 | 1967 | 65 | excellent | pass | Example |
| 37 | W | 90.0 | 1.0 | 4.3 | $\theta$ | 0.68 | 10 | 1226 | 1514 | 81 | excellent | pass | Example |
| 38 | X | 90.0 | 2.0 | 4.2 | $\theta$ | 0.47 | 11 | 1164 | 1594 | 73 | excellent | pass | Example |
| 39 | Y | 85.0 | 6.0 | 5.0 | $\theta$ | 0.78 | 20 | 970 | 1228 | 79 | excellent | pass | Example |
| 40 | Z | 88.0 | 8.0 | 3.8 | $\theta$ | 0.01 | 8 | 1113 | 1524 | 73 | excellent | pass | Example |
| 41 | a | 83.0 | 10.0 | 5.8 | $\theta$ | 0.27 | 25 | 803 | 1181 | 68 | excellent | pass | Example |
| 42 | b | 83.0 | 0.0 | 15.2 | $\theta$ | 0.72 | 8 | 1370 | 2045 | 67 | good | pass | Example |
| 43 | <u>c</u> | 77.0 | 0.0 | <u>20.9</u> | $\theta$ | 0.78 | 5 | 1339 | 2060 | 65 | <u>poor</u> | fail | Comparative Example |
| 44 | d | 91.0 | 5.0 | 0.2 | $\theta$ | 0.43 | 20 | 797 | 1189 | 67 | excellent | pass | Example |
| 45 | e | 64.0 | 20.0 | 14.6 | $\theta$ | 0.57 | 11 | 813 | 1251 | 65 | good | pass | Example |
| 46 | f | 85.0 | 10.0 | 1.8 | $\theta$ | 0.38 | 22 | 793 | 1184 | 67 | excellent | pass | Example |
| 47 | g | 84.0 | 0.0 | 14.8 | $\theta$ | 0.88 | 7 | 844 | 1298 | 65 | good | pass | Example |
| 48 | h | 89.0 | 5.0 | 3.3 | $\theta$ | 0.58 | 25 | 1123 | 1581 | 71 | good | pass | Example |
| 49 | i | 91.0 | 2.0 | 3.4 | $\theta$ | 0.26 | 24 | 1115 | 1528 | 73 | good | pass | Example |
| 50 | j | 88.0 | 6.0 | 3.4 | $\theta$ | 0.59 | 18 | 1074 | 1556 | 69 | good | pass | Example |
| 51 | k | 92.0 | 3.0 | 3.5 | $\theta$ | 0.25 | 20 | 1083 | 1484 | 73 | good | pass | Example |
| 52 | l | 93.0 | 2.0 | 3.4 | $\theta$ | 0.66 | 17 | 1102 | 1531 | 72 | good | pass | Example |
| 53 | m | 93.0 | 0.0 | 3.5 | $\theta$ | 0.19 | 19 | 1099 | 1548 | 71 | good | pass | Example |
| 54 | n | 89.0 | 5.0 | 3.0 | $\theta$ | 0.03 | 21 | 1111 | 1543 | 72 | good | pass | Example |
| 55 | o | 94.0 | 0.0 | 2.0 | $\theta$ | 0.48 | 5 | 1283 | 1509 | 85 | good | pass | Example |

EP 4 647 518 A1

| No. | Steel sample ID | Area ratio of M (%) | Area ratio of $\alpha$ (%) | Volume fraction of retained $\gamma$ (%) | Balance microstructure | Standard deviation of Si concentration /average Si concentration | Thickness of surface soft layer ($\mu$m) | YS (MPa) | TS (MPa) | YR (%) | Bendability | Damage to shear end face in a corrosion environment | Notes |
|---|---|---|---|---|---|---|---|---|---|---|---|---|---|
| 56 | p | 95.0 | 0.0 | 2.4 | $\theta$ | 0.46 | 21 | 1284 | 1510 | 85 | good | pass | Example |

Underlined values are outside of the range.

M: martensite, $\alpha$: ferrite and/or bainitic ferrite, retained $\gamma$: retained austenite, $\theta$: cementite and/or metastable carbide

As illustrated in Table 3, in the Examples of the present disclosure, the TS was 1180 MPa or more, and the YR, bendability, and degree of damage to the sheared end face in a corrosion environment were excellent. On the other hand, in the Comparative Examples, one or more of TS, YR, bendability, and damage to the sheared end face in a corrosion environment were inferior.

[Test Nos. 48 to 80]

Steels having the chemical compositions presented in Table 1, each with the balance being Fe and inevitable impurities, were prepared by steelmaking in a converter and formed into slabs by continuous casting. The obtained slab was heated, subjected to pickling treatment after hot rolling, and then cold rolled.

For some cold-rolled steel sheets, a metal electroplating treatment was performed. In the column for the presence or absence of metal electroplating treatment in Table 4 (plating type), an entry of Yes (Fe) indicates an example in which Fe-based electroplating treatment was performed, and an entry of (Ni) indicates an example in which Ni-based electroplating treatment was performed. The composition of the metal electroplating layer contained Fe: 95 mass% to 100 mass% for Fe-based electroplating and Ni: 95 mass% to 100 mass% for Ni-based electroplating, with the balance in each case being inevitable impurities.

Next, the cold-rolled steel sheet was subjected to the coating treatment of the type illustrated in Table 4 (GI, GA), resulting in a coated steel sheet with a hot-dip galvanized layer on both sides. The conditions for GI and GA were the same as above.

Next, after holding or cooling, reheating treatment was performed under the set of conditions illustrated in Table 4. The unspecified conditions were conditions according to a conventional method.

The chemical composition of the obtained base steel sheet of the steel sheet was substantially the same as the chemical composition at the steel slab stage, and each conforming steel was within the range of the chemical composition according to the above embodiment.

For the steel sheets obtained in this way, the steel microstructure, the standard deviation of the Si concentration/average Si concentration at the 1/2 thickness position, and the thickness of the surface soft layer were measured. In addition, the coating weight of the metal coated or plated layer was measured, and the nanohardness of the surface soft layer was measured. The results are listed in Table 5.

[Nanohardness of the surface soft layer]

For the high strength galvanized steel sheets, after the removal of the coated or plated layer (hot-dip galvanized layer or alloyed galvanized layer galvannealed layer, and in some cases, metal electroplating layer), mechanical polishing was performed to the 1/4 depth in the thickness direction of the surface soft layer from the base steel sheet surface, followed by buff polishing with diamond and alumina, and colloidal silica polishing. Using the tribo-950 by Hysitron, a Berkovich-shaped diamond indenter was used to measure the nanohardness at a total of 512 points under the following set of conditions.

Load: 500 $\mu$N
Measurement region: 50 $\mu$m $\times$ 50 $\mu$m
Point interval: 2 $\mu$m

Next, mechanical polishing was performed up to the 1/2 depth position in the thickness direction of the surface soft layer, followed by buff polishing with diamond and alumina, and colloidal silica polishing. Using the tribo-950 by Hysitron, a Berkovich-shaped diamond indenter was used to measure the nanohardness at a total of 512 points under the following set of conditions.

Load: 500 $\mu$N
Measurement region: 50 $\mu$m $\times$ 50 $\mu$m
Point interval: 2 $\mu$m

The obtained steel sheets were evaluated for the tensile property, bendability, and damage to the sheared end face in a corrosion environment in the same manner as described above. The results are listed in Table 5.

The obtained steel sheets were subjected to a U-bend + close-bend test, V-bend + orthogonal VDA bend test, and an axial crushing test. In consideration of the influence of sheet thickness, all of these tests were conducted using steel sheets with a thickness of 1.2 mm. Steel sheets thicker than 1.2 mm were ground on one side to achieve a thickness of 1.2 mm. Since the bendability of the steel sheet surface may be affected by grinding, in the U-bend + close-bend test, the ground surface was on the inside of the bend (valley side), and in the V-bend + orthogonal VDA bend test, the ground surface was on the outside of the bend (mountain side) during the V-bend test, and then on the inside of the bend (valley side) during the subsequent VDA bend test. On the other hand, for the U-bend + close-bend test, V-bend + orthogonal VDA bend tests, and axial crushing test of galvanized steel sheets with a thickness of less than 1.2, the influence of thickness is small, and the tests were therefore conducted without grinding.

[U-bend + close-bend test]

The U-bend + close-bend test was conducted as follows.

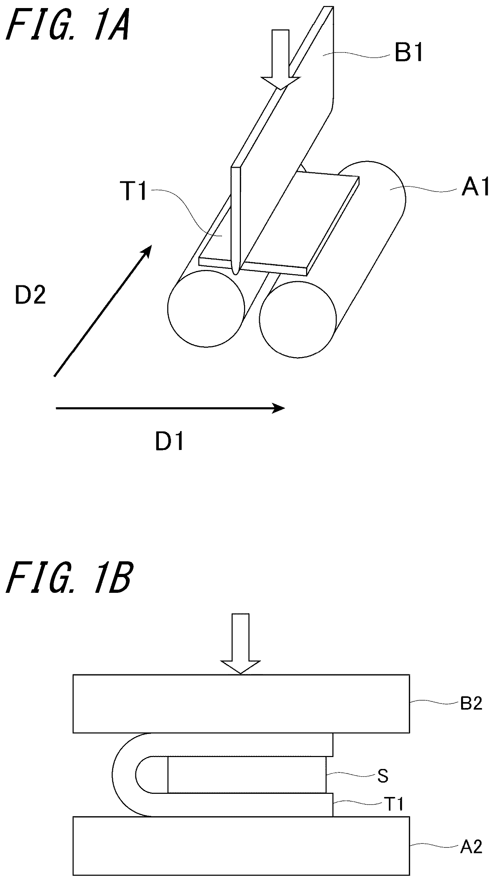

From the obtained steel sheets, a test piece of 60 mm × 30 mm was collected by shearing and end-face grinding. Here, the 60 mm side is parallel to the width (C) direction. A test piece was prepared by performing U-bending (primary bending) in the width (C) direction with the rolling (L) direction as the axis at a curvature radius/sheet thickness of 4.2. In the U-bending (primary bending), as illustrated in FIG. 1A, the steel sheet placed on a roll A1 was pressed with a punch B1 to obtain a test piece T1. Next, as illustrated in FIG. 1B, the test piece T1 placed on a lower press mold A2 was subjected to close-bending (secondary bending) by being crushed with an upper press mold B2. In FIG. 1A, D1 indicates the width (C) direction, and D2 indicates the rolling (L) direction. A spacer S, which will be described later, is inserted between the test pieces.

The set of conditions for the U-bend in the U-bend + close-bend test are as follows.

Test method: roller support, punch pressing
Punch tip radius R: 5.0 mm
Clearance between roller and punch: sheet thickness + 0.1 mm
Stroke speed: 10 mm/min
Bending direction: orthogonal to rolling (C) direction

The set of conditions for close bending in the U-bend + close-bend test are as follows.

Spacer thickness: changed at a 0.5 mm pitch
Test method: die support, punch pressing
Forming load: 10 tonnes
Test speed: 10 mm/min
Holding time: 5 s
Bending direction: orthogonal to rolling (C) direction

The U-bend + close-bend test was carried out three times, and the limit spacer thickness (ST) was determined when no cracks occurred in any of the three tests. Using a Leica stereomicroscope, a fissure longer than 200 $\mu$m at 25x magnification was judged to be a crack. ST serves as an indicator for evaluating the fracture resistance characteristics during collision (fracture resistance characteristics of the wall portion in the axial crushing test). The results are listed in Table 5.

The criteria for passing of the limit spacer thickness (ST) are as follows.

5.5 mm $\geq$ ST in the case of 1180 MPa $\leq$ TS < 1320 MPa
6.0 mm $\geq$ ST in the case of 1320 MPa $\leq$ TS

The criteria for failing of the limit spacer thickness (ST) are as follows.

5.5 mm < ST in the case of 1180 MPa $\leq$ TS < 1320 MPa
6.0 mm < ST in the case of 1320 MPa $\leq$ TS

[V-bend + orthogonal VDA bend test]

The V-bend + orthogonal VDA bend test was conducted as follows.

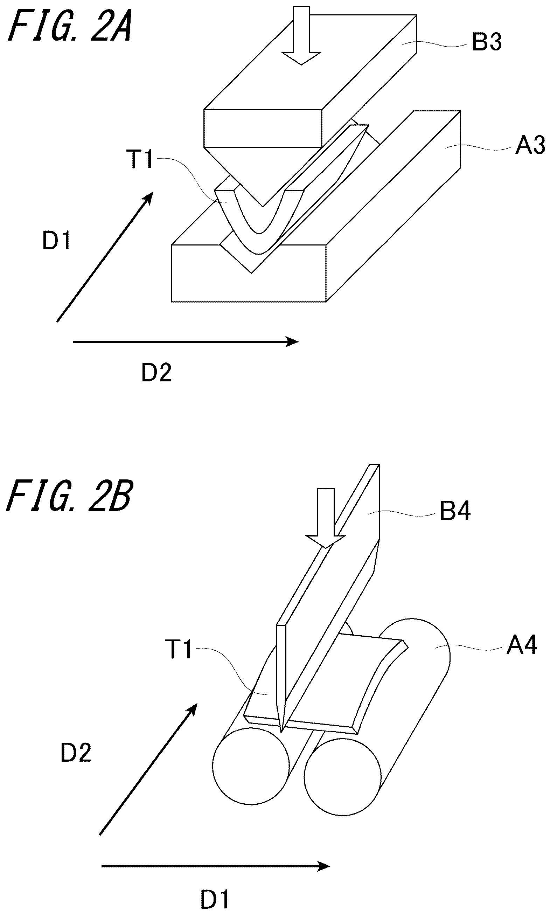

From the obtained steel sheets, a test piece of 60 mm × 65 mm was collected by shearing and end-face grinding. Here, the 60 mm side is parallel to the rolling (L) direction. A test piece was prepared by performing a 90° bending (primary bending) in the rolling (L) direction with the width (C) direction as the axis at a curvature radius/sheet thickness of 4.2. In the 90° bending process (primary bending), as illustrated in FIG. 2A, a punch B3 was pressed against the steel sheet placed on a die A3 with a V groove to obtain a test piece T1. Next, as illustrated in FIG. 2B, a punch B4 was pressed against the test piece T1 placed on a support roller A4, so that the bending direction was in the direction orthogonal to the rolling direction, to perform orthogonal bending (secondary bending). In FIGS. 2A and 2B, D1 indicates the width (C) direction, and D2 indicates the rolling (L) direction.

The conditions for the V-bend in the V-bend + orthogonal VDA bend test are as follows.

Test method: die support, punch pressing
Forming load: 10 tonnes
Test speed: 30 mm/min
Holding time: 5 s
Bending direction: rolling (L) direction

The conditions for VDA bending in the V-bend + orthogonal VDA bend test are as follows.

Test method: roller support, punch pressing
Roll diameter: $\phi$30 mm
Punch tip radius R: 0.4 mm
Roll gap: (sheet thickness $\times$ 2) + 0.5 mm
Stroke speed: 20 mm/min
Test piece size: 60 mm $\times$ 60 mm
Bending direction: orthogonal to rolling (C) direction

In the stroke-load curve obtained when the aforementioned VDA bending is applied, the stroke at maximum load is determined. The average value of the stroke at maximum load when conducting the V-bend + orthogonal VDA bend test three times was defined as $SF_{max}$ (mm). $SF_{max}$ serves as an indicator to evaluate the fracture resistance characteristics during collision (the fracture resistance characteristics of the bending ridge in the axial crushing test). The results are listed in Table 5.

The criteria for passing of $SF_{max}$ are as follows.

24.5 mm $\leq SF_{max}$ in the case of 1180 MPa $\leq$ TS < 1470 MPa
23.5 mm $\leq SF_{max}$ in the case of 1470 MPa $\leq$ TS

The criteria for failing of $SF_{max}$ are as follows.

24.5 mm > $SF_{max}$ in the case of 1180 MPa $\leq$ TS < 1470 MPa
23.5 mm > $SF_{max}$ in the case of 1470 MPa $\leq$ TS

[Axial crushing test]

The axial crushing test was conducted as follows.

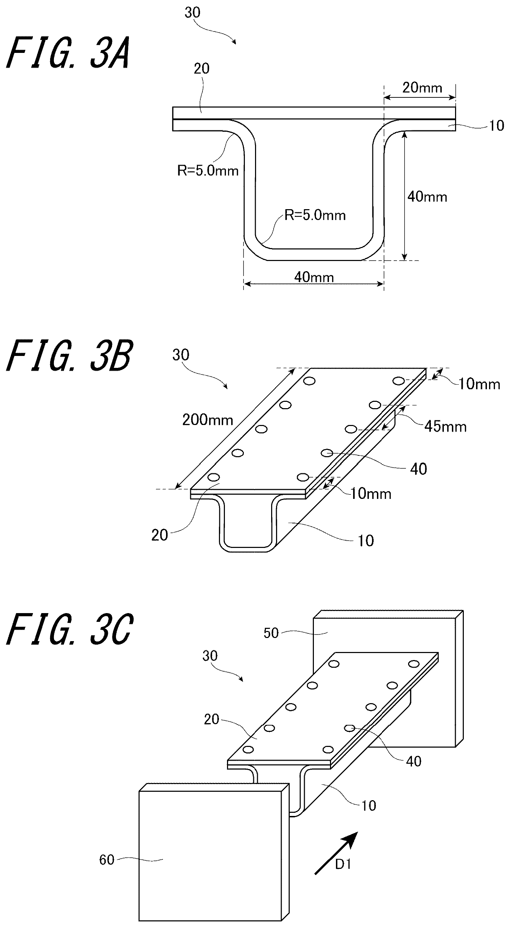

From the obtained steel sheets, a test piece of 150 mm $\times$ 100 mm was collected by shearing. Here, the 150 mm side is parallel to the rolling (L) direction. Using a press mold with a punch shoulder radius of 5.0 mm and a die shoulder radius of 5.0 mm, a forming process (bending process) was performed to achieve a depth of 40 mm, resulting in the production of the hat-shaped member 10 illustrated in FIGS. 3A and 3B. Additionally, the steel sheet used as the material for the hat-shaped member was separately cut to a size of 80 mm $\times$ 100 mm. Next, the cut steel sheet 20 and the hat-shaped member 10 were spot welded to create a test member 30 as illustrated in FIGS. 3A and 3B. FIG. 3A is a front view of the test member 30 created by spot welding the hat-shaped member 10 and the steel sheet 20. FIG. 3B is a perspective view of the test member 30. The positions of the spot welded portions 40 were set so that the distance between the end of the steel sheet and a welded portion was 10 mm, and the interval between the welded portions was 20 mm, as illustrated in FIG. 3B. Next, as illustrated in FIG. 3C, the test member 30 was joined to the base sheet 50 by TIG welding to create a sample for the axial crushing test. Next, the created sample for the axial crushing test was subjected to a constant speed collision with an impactor 60 at a collision speed of 10 mm/min, resulting in a 70 mm crushing of the sample for the axial crushing test. As illustrated in FIG. 3C, the crushing direction was set parallel to the longitudinal direction of the test member 30. The results are listed in Table 5.

The criteria for evaluating the presence of axial crushing fracture (appearance crack) are as follows.

A (Pass): No appearance cracks were observed in the sample after the axial crushing test
B (Pass): One or fewer appearance cracks were observed in the sample after the axial crushing test
C (Fail): Two or more appearance cracks were observed in the sample after the axial crushing test

[Table 4]

Table 4

| No. | Steel sample ID | Cooling conditions after casting | | Hot rolling conditions | | | | First coating or plating process | Heating process | | | | | Cooling process | | | | Reheating process | | Coating or plating treatment conditions | Notes |
|---|---|---|---|---|---|---|---|---|---|---|---|---|---|---|---|---|---|---|---|---|---|
| | | Average cooling rate at 700 °C or less and 500 °C or more (°C/hr) | Average cooling rate at 400 °C or more and less than 500 °C (°C/hr) | Slab heating temperature T₁ (°C) | Retention time in temperature range of 1100 °C or more and T₁ or less (min) | Coiling temperature (°C) | Retention time in temperature range of 300 °C or more and 400 °C or less in cooling after coiling (s) | Inclusion of coating or plating [type] | Average heating rate in temperature range of 250 °C or more and 700 °C or less (°C/s) | Retention time in temperature range of 750 °C or more and less than AC₃ point (s) | Heating temperature T₂ (°C) | Oxygen concentration in temperature range of 250 °C or more and 700 °C or less (ppm) | Dew point at heating temperature T₂ (°C) | Average cooling rate in temperature range of 250 °C or more and 400 °C or less (°C/s) | Holding temperature T₃ (°C) | Holding time (s) | Cooling stop temperature T₄ (°C) | Reheating temperature (°C) | Holding time at reheating temperature (s) | Type | |
| 48 | A | 7.0 | 5.0 | 1200 | 40 | 450 | 5000 | No | 20 | 30 | 846 | 13 | -17 | 14.7 | - | - | 50 | 350 | 50 | CR | Example |
| 49 | A | 7.0 | 5.0 | 1200 | 40 | 450 | 5000 | No | 20 | 30 | 839 | 13 | 6 | 14.7 | - | - | 50 | 350 | 50 | CR | Example |
| 50 | A | 7.0 | 5.0 | 1200 | 40 | 450 | 5000 | Yes [Fe] | 20 | 30 | 839 | 13 | -17 | 14.7 | - | - | 50 | 350 | 50 | CR | Example |
| 51 | A | 7.0 | 5.0 | 1200 | 40 | 450 | 5000 | Yes [Fe] | 20 | 30 | 842 | 13 | 6 | 14.7 | - | - | 50 | 350 | 50 | CR | Example |
| 52 | A | 7.0 | 5.0 | 1200 | 40 | 450 | 5000 | Yes [Ni] | 20 | 30 | 846 | 13 | 6 | 14.7 | - | - | 50 | 350 | 50 | CR | Example |
| 53 | A | 7.0 | 5.0 | 1200 | 40 | 450 | 5000 | No | 20 | 30 | 838 | 13 | 6 | 14.7 | - | - | 50 | 350 | 50 | GI | Example |
| 54 | A | 7.0 | 5.0 | 1200 | 40 | 450 | 5000 | Yes [Fe] | 20 | 30 | 834 | 13 | -17 | 14.7 | - | - | 50 | 350 | 50 | GI | Example |
| 55 | A | 7.0 | 5.0 | 1200 | 40 | 450 | 5000 | Yes [Fe] | 20 | 30 | 839 | 13 | 6 | 14.7 | - | - | 50 | 350 | 50 | GI | Example |
| 56 | A | 7.0 | 5.0 | 1200 | 40 | 450 | 5000 | No | 20 | 30 | 835 | 13 | 6 | 14.7 | - | - | 50 | 350 | 50 | GA | Example |
| 57 | A | 7.0 | 5.0 | 1200 | 40 | 450 | 5000 | Yes [Fe] | 20 | 30 | 846 | 13 | -17 | 14.7 | - | - | 50 | 350 | 50 | GA | Example |
| 58 | A | 7.0 | 5.0 | 1200 | 40 | 450 | 5000 | Yes [Fe] | 20 | 30 | 837 | 13 | 6 | 14.7 | - | - | 50 | 350 | 50 | GA | Example |
| 59 | L | 15.0 | 13.0 | 1250 | 50 | 450 | 8000 | No | 48 | 100 | 799 | 27 | -19 | 9.7 | - | - | room temperature | 300 | 50 | CR | Example |
| 60 | L | 15.0 | 13.0 | 1250 | 50 | 450 | 8000 | No | 48 | 100 | 804 | 27 | 10 | 9.7 | - | - | room temperature | 300 | 50 | CR | Example |
| 61 | L | 15.0 | 13.0 | 1250 | 50 | 450 | 8000 | Yes [Fe] | 48 | 100 | 799 | 27 | -19 | 9.7 | - | - | room temperature | 300 | 50 | CR | Example |
| 62 | L | 15.0 | 13.0 | 1250 | 50 | 450 | 8000 | Yes [Fe] | 48 | 100 | 806 | 27 | 10 | 9.7 | - | - | room temperature | 300 | 50 | CR | Example |
| 63 | L | 15.0 | 13.0 | 1250 | 50 | 450 | 8000 | Yes [Ni] | 48 | 100 | 805 | 27 | 10 | 9.7 | - | - | room temperature | 300 | 50 | CR | Example |
| 64 | L | 15.0 | 13.0 | 1250 | 50 | 450 | 8000 | No | 48 | 100 | 798 | 27 | 10 | 9.7 | - | - | room temperature | 300 | 50 | GI | Example |
| 65 | L | 15.0 | 13.0 | 1250 | 50 | 450 | 8000 | Yes [Fe] | 48 | 100 | 797 | 27 | -19 | 9.7 | - | - | room temperature | 300 | 50 | GI | Example |
| 66 | L | 15.0 | 13.0 | 1250 | 50 | 450 | 8000 | Yes [Fe] | 48 | 100 | 801 | 27 | 10 | 9.7 | - | - | room temperature | 300 | 50 | GI | Example |
| 67 | L | 15.0 | 13.0 | 1250 | 50 | 450 | 8000 | No | 48 | 100 | 804 | 27 | 10 | 9.7 | - | - | room temperature | 300 | 50 | GA | Example |
| 68 | L | 15.0 | 13.0 | 1250 | 50 | 450 | 8000 | Yes [Fe] | 48 | 100 | 806 | 27 | -19 | 9.7 | - | - | room temperature | 300 | 50 | GA | Example |
| 69 | L | 15.0 | 13.0 | 1250 | 50 | 450 | 8000 | Yes [Fe] | 48 | 100 | 800 | 27 | 10 | 9.7 | - | - | room temperature | 300 | 50 | GA | Example |
| 70 | T | 15.0 | 13.0 | 1150 | 40 | 550 | 10000 | No | 25 | 60 | 877 | 11 | -13 | 9.9 | - | - | 50 | 250 | 100 | CR | Example |
| 71 | T | 15.0 | 13.0 | 1150 | 40 | 550 | 10000 | No | 25 | 60 | 875 | 11 | 4 | 9.9 | - | - | 50 | 250 | 100 | CR | Example |
| 72 | T | 15.0 | 13.0 | 1150 | 40 | 550 | 10000 | Yes [Fe] | 25 | 60 | 876 | 11 | -13 | 9.9 | - | - | 50 | 250 | 100 | CR | Example |
| 73 | T | 15.0 | 13.0 | 1150 | 40 | 550 | 10000 | Yes [Fe] | 25 | 60 | 885 | 11 | 4 | 9.9 | - | - | 50 | 250 | 100 | CR | Example |
| 74 | T | 15.0 | 13.0 | 1150 | 40 | 550 | 10000 | Yes [Ni] | 25 | 60 | 877 | 11 | 4 | 9.9 | - | - | 50 | 250 | 100 | CR | Example |
| 75 | T | 15.0 | 13.0 | 1150 | 40 | 550 | 10000 | No | 25 | 60 | 879 | 11 | 4 | 9.9 | - | - | 50 | 250 | 100 | GI | Example |
| 76 | T | 15.0 | 13.0 | 1150 | 40 | 550 | 10000 | Yes [Fe] | 25 | 60 | 875 | 11 | -13 | 9.9 | - | - | 50 | 250 | 100 | GI | Example |
| 77 | T | 15.0 | 13.0 | 1150 | 40 | 550 | 10000 | Yes [Fe] | 25 | 60 | 881 | 11 | 4 | 9.9 | - | - | 50 | 250 | 100 | GI | Example |
| 78 | T | 15.0 | 13.0 | 1150 | 40 | 550 | 10000 | No | 25 | 60 | 875 | 11 | 4 | 9.9 | - | - | 50 | 250 | 100 | GA | Example |
| 79 | T | 15.0 | 13.0 | 1150 | 40 | 550 | 10000 | Yes [Fe] | 25 | 60 | 878 | 11 | -13 | 9.9 | - | - | 50 | 250 | 100 | GA | Example |
| 80 | T | 15.0 | 13.0 | 1150 | 40 | 550 | 10000 | Yes [Fe] | 25 | 60 | 886 | 11 | 4 | 9.9 | - | - | 50 | 250 | 100 | GA | Example |

Underlined values are outside of the range.

[Table 5]

Table 5

| No. | Steel sample ID | Area ratio of M (%) | Area ratio of α (%) | Volume fraction of retained γ (%) | Balance microstructure | Standard deviation of Si concentration/average Si concentration | Thickness of surface soft layer (μm) | Coating weight of metal coating or plating (g/m²) | Ratio of Hn being 7 GPa or more | Standard deviation of Hn at 1/4 position of surface soft layer (GPa) | Standard deviation of Hn at 1/2 position of surface soft layer (GPa) | YS (MPa) | TS (MPa) | YR (%) | Bendability | Damage to shear end face in a corrosion environment | U-bend -close-bend ST (mm) | V-bend +VDA bending SFmax (mm) | Axial crushing characteristics | Type | Notes |
|---|---|---|---|---|---|---|---|---|---|---|---|---|---|---|---|---|---|---|---|---|---|
| 48 | A | 97.0 | 0.0 | 2.7 | θ | 0.63 | 16 | - | 0.08 | 1.7 | 2.0 | 1171 | 1521 | 77 | excellent | pass | 6.0 | 24.2 | B | CR | Example |
| 49 | A | 96.0 | 0.0 | 3.8 | θ | 0.63 | 32 | - | 0.06 | 1.3 | 1.6 | 1143 | 1524 | 75 | excellent | pass | 4.5 | 25.2 | A | CR | Example |
| 50 | A | 95.0 | 0.0 | 4.7 | θ | 0.63 | 28 | 10.0 | 0.07 | 1.5 | 1.7 | 1169 | 1518 | 77 | excellent | pass | 5.0 | 24.9 | A | CR | Example |
| 51 | A | 96.0 | 0.0 | 3.6 | θ | 0.63 | 40 | 10.0 | 0.04 | 1.0 | 1.2 | 1171 | 1521 | 77 | excellent | pass | 4.0 | 26.3 | A | CR | Example |
| 52 | A | 97.0 | 0.0 | 2.7 | θ | 0.63 | 42 | 10.0 | 0.05 | 1.1 | 1.3 | 1139 | 1519 | 75 | excellent | pass | 4.5 | 26.2 | A | CR | Example |
| 53 | A | 96.0 | 0.0 | 3.7 | θ | 0.63 | 34 | - | 0.06 | 1.2 | 1.5 | 1139 | 1518 | 75 | excellent | pass | 4.5 | 25.1 | A | GI | Example |
| 54 | A | 95.0 | 0.0 | 4.8 | θ | 0.63 | 30 | 10.0 | 0.07 | 1.5 | 1.7 | 1138 | 1517 | 75 | excellent | pass | 5.0 | 24.9 | A | GI | Example |
| 55 | A | 94.0 | 0.0 | 5.7 | θ | 0.63 | 42 | 10.0 | 0.05 | 1.0 | 1.3 | 1156 | 1521 | 76 | excellent | pass | 3.5 | 26.4 | A | GI | Example |
| 56 | A | 95.0 | 0.0 | 4.6 | θ | 0.63 | 31 | - | 0.05 | 1.2 | 1.5 | 1139 | 1519 | 75 | excellent | pass | 4.5 | 25.2 | A | GA | Example |
| 57 | A | 97.0 | 0.0 | 2.7 | θ | 0.63 | 30 | 10.0 | 0.07 | 1.4 | 1.6 | 1140 | 1520 | 75 | excellent | pass | 4.5 | 25.0 | A | GA | Example |
| 58 | A | 95.0 | 0.0 | 4.7 | θ | 0.63 | 45 | 10.0 | 0.05 | 1.0 | 1.2 | 1139 | 1519 | 75 | excellent | pass | 3.5 | 26.5 | A | GA | Example |
| 59 | L | 88.0 | 5.0 | 3.8 | θ | 0.19 | 18 | - | 0.09 | 1.7 | 2.1 | 1060 | 1536 | 69 | excellent | pass | 6.0 | 24.0 | B | CR | Example |
| 60 | L | 92.0 | 4.0 | 2.8 | θ | 0.19 | 35 | - | 0.05 | 1.2 | 1.5 | 1096 | 1543 | 71 | excellent | pass | 4.5 | 25.2 | A | CR | Example |
| 61 | L | 90.0 | 4.0 | 3.0 | θ | 0.19 | 26 | 13.0 | 0.07 | 1.6 | 1.8 | 1077 | 1538 | 70 | excellent | pass | 5.0 | 24.7 | A | CR | Example |
| 62 | L | 91.0 | 3.0 | 2.9 | θ | 0.19 | 45 | 13.0 | 0.03 | 0.9 | 1.0 | 1062 | 1539 | 69 | excellent | pass | 4.0 | 26.6 | A | CR | Example |
| 63 | L | 92.0 | 4.0 | 2.7 | θ | 0.19 | 44 | 13.0 | 0.03 | 1.0 | 1.1 | 1063 | 1540 | 69 | excellent | pass | 4.5 | 26.5 | A | CR | Example |
| 64 | L | 91.0 | 3.0 | 3.8 | θ | 0.19 | 36 | - | 0.05 | 1.2 | 1.5 | 1064 | 1542 | 69 | excellent | pass | 4.5 | 25.0 | A | GI | Example |
| 65 | L | 92.0 | 5.0 | 1.2 | θ | 0.19 | 25 | 13.0 | 0.07 | 1.6 | 1.7 | 1061 | 1537 | 69 | excellent | pass | 5.5 | 24.7 | A | GI | Example |
| 66 | L | 89.0 | 3.0 | 2.8 | θ | 0.19 | 45 | 13.0 | 0.02 | 0.9 | 1.0 | 1078 | 1540 | 70 | excellent | pass | 3.5 | 26.6 | A | GI | Example |
| 67 | L | 91.0 | 3.0 | 3.0 | θ | 0.19 | 35 | - | 0.05 | 1.2 | 1.5 | 1091 | 1536 | 71 | excellent | pass | 4.5 | 25.0 | A | GA | Example |
| 68 | L | 91.0 | 4.0 | 3.8 | θ | 0.19 | 26 | 13.0 | 0.08 | 1.5 | 1.6 | 1060 | 1536 | 69 | excellent | pass | 5.0 | 24.8 | A | GA | Example |
| 69 | L | 88.0 | 5.0 | 2.8 | θ | 0.19 | 46 | 13.0 | 0.02 | 0.8 | 1.0 | 1077 | 1538 | 70 | excellent | pass | 3.0 | 26.7 | A | GA | Example |
| 70 | T | 92.0 | 2.0 | 2.8 | θ | 0.54 | 20 | - | 0.07 | 1.6 | 1.8 | 1204 | 1564 | 77 | excellent | pass | 5.5 | 23.9 | B | CR | Example |
| 71 | T | 89.0 | 5.0 | 2.5 | θ | 0.54 | 29 | - | 0.06 | 1.3 | 1.5 | 1219 | 1563 | 78 | excellent | pass | 4.5 | 25.1 | A | CR | Example |
| 72 | T | 90.0 | 4.0 | 2.8 | θ | 0.54 | 31 | 8.0 | 0.06 | 1.3 | 1.5 | 1207 | 1567 | 77 | excellent | pass | 5.0 | 24.8 | A | CR | Example |
| 73 | T | 90.0 | 5.0 | 1.8 | θ | 0.54 | 38 | 8.0 | 0.04 | 1.0 | 1.1 | 1239 | 1568 | 79 | excellent | pass | 4.0 | 26.5 | A | CR | Example |
| 74 | T | 90.0 | 3.0 | 3.8 | θ | 0.54 | 37 | 8.0 | 0.04 | 1.1 | 1.2 | 1219 | 1563 | 78 | excellent | pass | 4.5 | 26.3 | A | CR | Example |
| 75 | T | 88.0 | 4.0 | 3.8 | θ | 0.54 | 30 | - | 0.06 | 1.2 | 1.5 | 1206 | 1566 | 77 | excellent | pass | 4.5 | 24.8 | A | GI | Example |
| 76 | T | 88.0 | 3.0 | 4.4 | θ | 0.54 | 31 | 8.0 | 0.06 | 1.2 | 1.4 | 1206 | 1566 | 77 | excellent | pass | 5.0 | 24.7 | A | GI | Example |
| 77 | T | 89.0 | 3.0 | 5.0 | θ | 0.54 | 39 | 8.0 | 0.04 | 1.0 | 1.1 | 1205 | 1565 | 77 | excellent | pass | 4.0 | 26.3 | A | GI | Example |
| 78 | T | 90.0 | 4.0 | 0.8 | θ | 0.54 | 28 | - | 0.06 | 1.2 | 1.5 | 1202 | 1561 | 77 | excellent | pass | 4.5 | 24.9 | A | GA | Example |
| 79 | T | 92.0 | 4.0 | 2.8 | θ | 0.54 | 32 | 8.0 | 0.05 | 1.4 | 1.5 | 1220 | 1564 | 78 | excellent | pass | 4.5 | 25.0 | A | GA | Example |
| 80 | T | 88.0 | 5.0 | 3.8 | θ | 0.54 | 40 | 8.0 | 0.03 | 0.9 | 1.0 | 1236 | 1564 | 79 | excellent | pass | 3.5 | 26.4 | A | GA | Example |

Underlined values are outside of the range.
M: martensite, α: ferrite and/or bainitic ferrite, retained γ: retained austenite, θ: cementite and/or metastable carbide

As illustrated in Table 5, in the Examples of the present disclosure, the TS was 1180 MPa or more, and the YR, bendability, and degree of damage to the sheared end face in a corrosion environment were excellent. On the other hand, in the Comparative Examples, one or more of TS, YR, bendability, and damage to the sheared end face in a corrosion environment were inferior. In addition, in Table 5, in the range in which the dew point is -30 °C or more and -20 °C or less, the thickness of the soft layer of the surface layer was 14 µm or less, and the determination of fracture (appearance crack) in the axial crushing test was "B", but in the case in which a metal coated or plated layer was included, the determination of fracture (appearance crack) in the axial crushing test was "A" even when the thickness of the soft layer of the surface layer was 14 µm or less.

Although some embodiments of the disclosure have been described above, the present disclosure is not limited by the description that forms part of the disclosure in relation to the embodiments. That is, a person skilled in the art may make various modifications to the embodiments, examples, and operation techniques disclosed herein, and all such modifications will still fall within the scope of the claims which follow. For example, in the above-described series of heat treatments in the production method disclosed herein, any apparatus or the like may be used to perform the processes on the steel sheet as long as the thermal hysteresis conditions are met.

INDUSTRIAL APPLICABILITY

According to the present disclosure, a high strength steel sheet that has a TS of 1180 MPa or more, a high YR, a high bendability, and reduced damage to the sheared end face in a corrosion environment can be obtained.

In particular, the high strength steel sheet of the present disclosure has reduced damage to the sheared end face in a corrosion environment, enabling applications to various sizes and shapes of automobile frame structural components while achieving high component strength. This enables an improvement in fuel efficiency through automotive body weight reduction, which is of great industrial value.

REFERENCE SIGNS LIST

10 Hat-shaped member
20 Galvanized steel sheet
30 Test member
40 Spot welded portion
50 Base sheet
60 Impactor
A1 Die
A2 Support roll
A3 Die
A4 Support roll
B1 Punch
B2 Punch
B3 Punch
B4 Punch
D1 Width (C) direction
D2 Rolling (L) direction
S Spacer
T1 Test piece
T2 Test piece

**Claims**

1. A high strength steel sheet comprising:

a chemical composition containing, in mass%,
C: 0.030 % or more and 0.500 % or less,
Si: 0.01 % or more and 2.50 % or less,
Mn: 0.10 % or more and 5.00 % or less,
P: 0.100 % or less,
S: 0.0200 % or less,
Al: 1.000 % or less,

N: 0.0100 % or less, and

O: 0.0100 % or less,

with the balance being Fe and inevitable impurities, wherein

at a 1/4 thickness position,

an area ratio of martensite is 40 % or more,

an area ratio of ferrite is 70 % or less,

a volume fraction of retained austenite is 20.0 % or less, and at a 1/2 thickness position,

a ratio of a standard deviation of Si concentration to an average Si concentration is 1.00 or less.

2. The high strength steel sheet according to claim 1, wherein the chemical composition further contains, in mass%, at least one selected from the group consisting of

Ti: 0.200 % or less,

Nb: 0.200 % or less,

V: 0.200 % or less,

Ta: 0.10 % or less,

W: 0.10 % or less,

B: 0.0100 % or less,

Cr: 1.00 % or less,

Mo: 1.00 % or less,

Ni: 1.00 % or less,

Co: 0.010 % or less,

Cu: 1.00 % or less,

Sn: 0.200 % or less,

Sb: 0.200 % or less,

Ca: 0.0100 % or less,

Mg: 0.0100 % or less,

REM: 0.0100 % or less,

Zr: 0.100 % or less,

Te: 0.100 % or less,

Hf: 0.10 % or less, and

Bi: 0.200 % or less.

3. The high strength steel sheet according to claim 1 or 2, comprising a surface soft layer that is a region having a Vickers hardness of 85 % or less of a Vickers hardness at a 1/4 thickness position of the high strength steel sheet and is a region within 200 $\mu$m from a surface of the high strength steel sheet in a thickness direction, wherein

when measuring nanohardness at 300 or more points of a sheet surface in a 50 $\mu$m $\times$ 50 $\mu$m region at a 1/4 depth position in the thickness direction and a 1/2 depth position in the thickness direction of the surface soft layer from the surface of the high strength steel sheet,

a ratio of a number of measurements with a nanohardness of the sheet surface of 7.0 GPa or more at the 1/4 depth position in the thickness direction of the surface soft layer from the surface of the high strength steel sheet is 0.10 or less with respect to a total number of measurements,

a standard deviation $\sigma$ of the nanohardness of the sheet surface at the 1/4 depth position in the thickness direction of the surface soft layer from the surface of the high strength steel sheet is 1.8 GPa or less, and

a standard deviation $\sigma$ of the nanohardness of the sheet surface at the 1/2 depth position in the thickness direction of the surface soft layer from the surface of the high strength steel sheet is 2.2 GPa or less.

4. The high strength steel sheet according to any one of claims 1 to 3, comprising, on one side or both sides of the high strength steel sheet, a metal coated or plated layer containing a total of over 50 mass% of one or more selected from Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi.

5. The high strength steel sheet according to any one of claims 1 to 4, comprising, on an outermost layer of one side or both sides of the high strength steel sheet, a metal coated or plated layer containing a total of 50 mass% or more of at least one of zinc and aluminum.

6. A method of producing a high strength steel sheet, the method comprising:

casting molten steel having the chemical composition recited in claim 1 or 2 and subsequently cooling the molten steel with an average cooling rate of 3.0 °C/h or more in a temperature range of 500 °C or more and 700 °C or less, and an average cooling rate of 1.0 °C/h or more in a temperature range of 400 °C or more and less than 500 °C to obtain a steel slab;

heating the steel slab to a slab heating temperature $T_1$ of 1150 °C or more, subsequently hot rolling the steel slab with a coiling temperature of 600 °C or less and a retention time of 50000 s or less in a temperature range of 300 °C or more and 400 °C or less during cooling after coiling to obtain a hot-rolled sheet, the retention time in a temperature range of 1100 °C or more and $T_1$ or less during heating of the steel slab being 20 min or more;

pickling the hot-rolled sheet;

cold rolling the hot-rolled sheet subjected to picking to obtain a cold-rolled sheet;

heating the cold-rolled sheet to a heating temperature $T_2$ at or above an $Ac_3$ point in °C defined by Expression (1), with an average heating rate of 10 °C/s or more in a temperature range of 250 °C or more and 700 °C or less, to anneal the cold-rolled sheet, the retention time in a temperature range of 750 °C or more and less than the $Ac_3$ point being 200 s or less; and

cooling the annealed cold-rolled sheet with an average cooling rate of 1.0 °C/s or more in a temperature range of 250 °C or more and 400 °C or less to obtain a high strength steel sheet,

$$Ac_3 \text{ point in } °C = 910 - 203 \times [\%C]^{1/2} + 44.7 \times [\%Si] - 30 \times [\%Mn] + 700 \times [\%P] + 400 \times [\%Al] + 400 \times [\%Ti] + 104 \times [\%V] + 13.1 \times [\%W] - 11 \times [\%Cr] + 31.5 \times [\%Mo] - 15.2 \times [\%Ni] - 20 \times [\%Cu] \qquad (1)$$

where [%X] indicates a content of a component element X in steel in mass% and is 0 in a case in which the component element X is not contained.

7. The method of producing a high strength steel sheet according to claim 6, wherein in the annealing of the cold-rolled sheet, an oxygen concentration of an atmosphere in the temperature range of 250 °C or more and 700 °C or less is 2 volume ppm or more and 30 volume ppm or less, and a dew point of the atmosphere at the heating temperature $T_2$ is -35 °C or more.

8. The method of producing a high strength steel sheet according to claim 6 or 7, wherein the cooling of the annealed cold-rolled sheet includes holding at a temperature $T_3$ of 100 °C or more and 450 °C or less for 5 s or more.

9. The method of producing a high strength steel sheet according to any one of claims 6 to 8, wherein in the cooling of the annealed cold-rolled sheet, after stopping cooling at a cooling stop temperature $T_4$ of 250 °C or less, the annealed cold-rolled sheet is reheated to a temperature of $T_4 + 50$ °C or more and 450 °C or less and is held at the temperature for 5 s or more.

10. The method of producing a high strength steel sheet according to any one of claims 6 to 9, comprising applying a metal coating or plating on one side or both sides of the cold-rolled sheet before annealing of the cold-rolled sheet, the metal coating or plating containing a total of over 50 mass% of one or more selected from Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi.

11. The method of producing a high strength steel sheet according to any one of claims 6 to 10, comprising performing coating or plating treatment after cooling of the annealed cold-rolled sheet to apply a metal coating or plating containing a total of 50 mass% or more of at least one of zinc and aluminum.

12. A member at least partially made of the high strength steel sheet according to any one of claims 1 to 5.

13. An automotive part made from the member according to claim 12.

*FIG. 1A*

B1

T1

A1

D2

D1

*FIG. 1B*

B2

S

T1

A2

*FIG. 2A*

B3

A3

T1

D1

D2

*FIG. 2B*

B4

T1

A4

D2

D1

*FIG. 3A*

*FIG. 3B*

*FIG. 3C*

## INTERNATIONAL SEARCH REPORT

International application No.

**PCT/JP2023/014138**

| A. | CLASSIFICATION OF SUBJECT MATTER |
|---|---|

*C21D 9/46*(2006.01)i; *C22C 38/00*(2006.01)i; *C22C 38/06*(2006.01)i; *C22C 38/60*(2006.01)i
FI:   C22C38/00 301S; C22C38/00 301T; C22C38/06; C22C38/60; C21D9/46 G; C21D9/46 H

According to International Patent Classification (IPC) or to both national classification and IPC

| B. | FIELDS SEARCHED |
|---|---|

Minimum documentation searched (classification system followed by classification symbols)

C21D9/46; C22C38/00; C22C38/06; C22C38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/080497 A1 (NIPPON STEEL CORPORATION) 21 April 2022 (2022-04-21) | 1-13 |
| A | WO 2022/270053 A1 (JFE STEEL CORPORATION) 29 December 2022 (2022-12-29) | 1-13 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 June 2023** | **27 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/014138**

| Patent document cited in search report | | | Publication date (day/month/year) | Patent family member(s) | | | Publication date (day/month/year) |
|---|---|---|---|---|---|---|---|
| WO | 2022/080497 | A1 | 21 April 2022 | EP | 4186987 | A1 | |
| | | | | CN | 116018416 | A | |
| | | | | KR | 10-2023-0059822 | A | |
| WO | 2022/270053 | A1 | 29 December 2022 | JP | 7195501 | B1 | |

Form PCT/ISA/210 (patent family annex) (January 2015)

**EP 4 647 518 A1**

**Patent documents cited in the description**

• JP 2012219342 A